# EUROPEAN PATENT APPLICATION

(11) **EP 4 524 180 A1**
(43) Date of publication of application: **19.03.2025**
(21) Application number: 24199443.3
(22) Date of filing: 10.09.2024
(51) Int. Cl.: C08G 77/24, C08G 77/50, C09D 183/08, C09D 183/14

(54) **TEMPERATURE RESISTANT SOL-GEL**

(30) Priority: 12.09.2023 US 202363582213 P; 07.05.2024 US 202418656880
(71) Applicant: The Boeing Company, Arlington, VA 22202 (US)
(72) Inventor: DHIRDE, Priyanka G., Arlington, 22202 (US); KATTA, Pradeep Prem Kumar, Arlington, 22202 (US)
(74) Representative: Boult Wade Tennant LLP

(57) **Abstract**

The present disclosure provides a sol-gel the present disclosure provides a sol-gel that is a crosslinked siloxane. The sol-gel includes a first siloxane unit represented by formula (1): 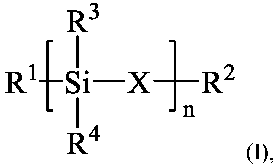 wherein X is an oxygen, R¹ is a hydrogen, oxygen, hydroxyl, or silane group, R² is a hydrogen, hydroxyl, or silane group, each of R³ and R⁴ is independently linear or branched C₁₋₂₀ alkyl, C₁₋₂₀ cycloalkyl, oxysilane, ether, epoxide, aryl alkylfluroide, cycloalkylfluoride, and arylfluoride groups, and n is 1 to 100. The sol-gel includes a second siloxane unit represented by formula (1), wherein the second siloxane unit is different than the first siloxane unit. The sol-gel includes a hydrophobic agent represented by formula (1), wherein the hydrophobic agent comprises at least one alkylflouride group.

## Description

### FIELD

Examples of the present disclosure generally relate to corrosion resistant sol-gel films for aerospace applications.

### BACKGROUND

Metals, such as steel, aluminum, aluminum alloys, and galvanized metals, used in the manufacture of aircraft, spacecraft, and other machinery can be susceptible to corrosion. Conventionally, anodized coatings of metal substrates, *e.g*., sol-gel films, having corrosion inhibitors and metal oxides disposed throughout the sol-gel film have been disposed on a metal substrate to reduce corrosion of the metal substrate. Chromates, such as zinc salts of hexavalent chromium, have been used as corrosion inhibitors in conjunction with the sol-gel films to assist in reducing corrosion of the metal substrate. However, there is regulatory pressure to eliminate the use of hexavalent chromium and other chromates from conversion coatings, primers, and manufacturing processes.

There is a need in the art for improved sol-gel films.

### SUMMARY

The present disclosure provides a sol-gel mixture. The sol-gel mixture includes a first organosilane having a structure represented by formula (V): 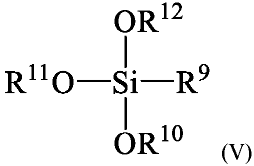 wherein: each of R¹⁰, R¹¹, and R¹² is independently linear or branched C₁₋₂₀ alkyl, and R⁹ is selected from alkyl, cycloalkyl, ether, epoxide, and aryl. The sol-gel mixture includes a second organosilane represented by formula (V), wherein the second organosilane is different than the first organosilane. The sol-gel mixture includes a hydrophobic agent comprising a concentration in the sol-gel mixture of about 1 wt % to about 8 wt% (or 1 wt % to 8 wt%) of the total sol-gel mixture.

The present disclosure provides a sol-gel that is a cross-linked siloxane. The sol-gel includes a first siloxane unit represented by formula (I): 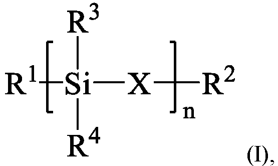 wherein X is an oxygen, R¹ is a hydrogen, oxygen, hydroxyl, or silane group, R² is a hydrogen, hydroxyl, or silane group, each of R³ and R⁴ is independently linear or branched C₁₋₂₀ alkyl, C₁₋₂₀ cycloalkyl, oxysilane, ether, epoxide, aryl alkylfluroide, cycloalkylfluoride, and arylfluoride groups, and n is 1 to 100. The sol-gel includes a second siloxane unit represented by formula (I), wherein the second siloxane unit is different than the first siloxane unit. The sol-gel includes a hydrophobic agent represented by formula (I), wherein the hydrophobic agent comprises at least one alkylflouride group.

The present disclosure provides a method for preparing a sol-gel from a sol-gel mixture. The method includes producing a sol-gel mixture by mixing a first organosilane with a second organosilane in an organic solvent. A hydrophobic agent is added to the sol-gel mixture. The sol-gel mixture is cured to form a sol-gel.

### BRIEF DESCRIPTION OF THE DRAWINGS

So that the manner in which the above recited features can be understood in detail, a more particular description, briefly summarized above, may be had by reference to examples, some of which are illustrated in the appended drawings.
FIG. 1 is a side view of a corrosion-inhibiting sol-gel disposed on a substrate, according to examples of the disclosure.
FIG. 2 is a schematic of a method for preparing a sol-gel, according to examples of the disclosure.
FIGS. 3A and 3B show water contact angles of a sol-gel before heating the sol-gel for 100 hours at 250 °C and after heating the sol-gel for 100 hours at 250 °C, according to examples of the disclosure. FIG. 3A shows a water contact angle before heating the sol-gel for 100 hours at 250 °C. FIG. 3B shows a water contact angle after heating the sol-gel for 100 hours at 250 °C.

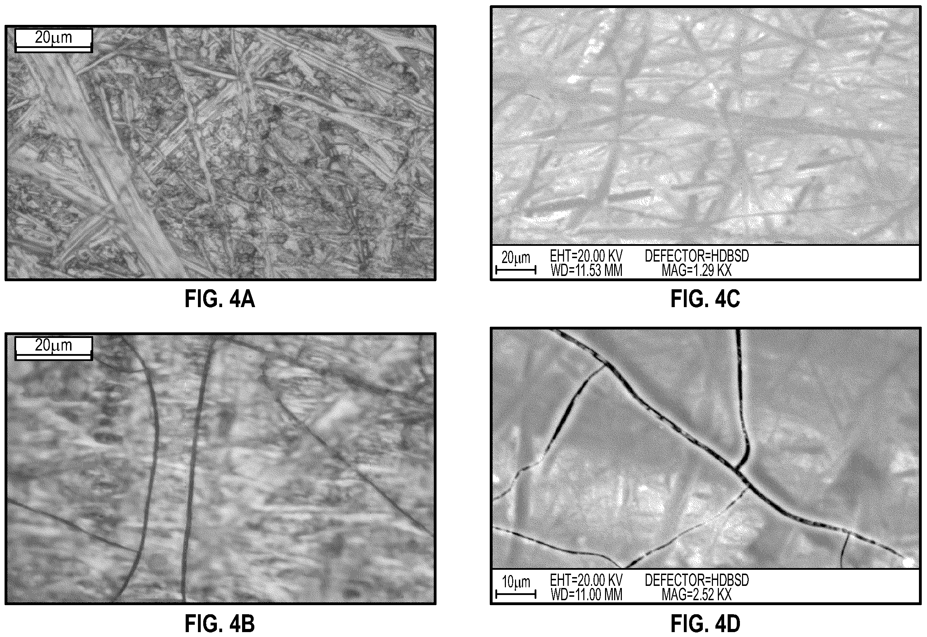

FIGS. 4A-4D show optical images of a sol-gel using either microscopy or scanning electron microscopy (SEM) techniques before heating the sol-gel for 100 hours at 250 °C and after heating the sol-gel for 100 hours at 250 °C, according to examples of the disclosure. FIG. 4A shows a microscope image of a sol-gel before heating the sol-gel for 100 hours at 250 °C. FIG. 4B shows a microscope image of a sol-gel after heating the sol-gel for 100 hours at 250 °C. FIG. 4C shows a SEM image of a sol-gel before heating the sol-gel for 100 hours at 250 °C. FIG. 4D shows a SEM image of a sol-gel after heating the sol-gel for 100 hours at 250 °C.
FIG. 5 shows an infrared graph of a first mixture from a fourier-transform infrared spectrometer.
FIG. 6 shows a thermogravimetric analysis of a first mixture.

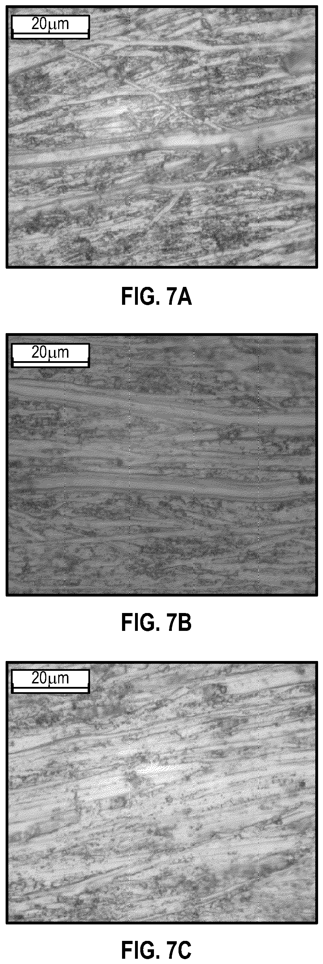

FIGS. 7A-7C show optical images of a sol-gel using SEM techniques after heating a sol-gel having various molar ratios of a first organosilane and a second organosilane for 100 hours at 250 °C, according to examples of the disclosure. FIG. 7A shows a SEM image of a sol-gel having a 2:1 molar ratio of a first organosilane and a second organosilane after heating the sol-gel for 100 hours at 250 °C. FIG. 7B shows a SEM image of a sol-gel having a 3:1 molar ratio of a first organosilane and a second organosilane after heating the sol-gel for 100 hours at 250 °C. FIG. 7C shows a SEM image of a sol-gel having a 4:1 molar ratio of a first organosilane and a second organosilane after heating the sol-gel for 100 hours at 250 °C.
FIG. 8 shows a polarization graph of a second mixture before heating the sol-gel for 100 hours at 250 °C and after heating the sol-gel for 100 hours at 250 °C, according to examples of the disclosure.
FIG. 9 shows an infrared graph of a second mixture from a fourier-transform infrared spectrometer.
FIGS. 10A and 10B show water contact angles of a sol-gel before heating the sol-gel for 100 hours at 250 °C and after heating the sol-gel for 100 hours at 250 °C, according to examples of the disclosure. FIG. 10A shows a water contact angle before heating the sol-gel for 100 hours at 250 °C. FIG. 10B shows a water contact angle after heating the sol-gel for 100 hours at 250 °C.
FIG. 11 shows a polarization graph of a second mixture before heating the sol-gel for 100 hours at 250 °C and after heating the sol-gel for 100 hours at 250 °C, according to examples of the disclosure.
FIGS. 12A and 12B show optical images of a sol-gel using SEM techniques before heating the sol-gel for 100 hours at 250 °C and after heating the sol-gel for 100 hours at 250 °C, according to examples of the disclosure. FIG. 12A shows a SEM image of a sol-gel before heating the sol-gel for 100 hours at 250 °C. FIG. 12B shows a SEM image of a sol-gel after heating the sol-gel for 100 hours at 250 °C.
FIGS. 13A and 13B show water contact angles of a sol-gel having a hydrophobic agent before heating the sol-gel for 100 hours at 250 °C and after heating the sol-gel for 100 hours at 250 °C, according to examples of the disclosure. FIG. 13A shows a water contact angle before heating the sol-gel for 100 hours at 250 °C. FIG. 13B shows a water contact angle after heating the sol-gel for 100 hours at 250 °C.
FIG. 14 shows a polarization graph of a sol-gel having a hydrophobic agent before heating the sol-gel for 100 hours at 250 °C and after heating the sol-gel for 100 hours at 250 °C, according to examples of the disclosure.
FIG. 15 shows an infrared graph of a second mixture having a hydrophobic agent from a fourier-transform infrared spectrometer.
FIG. 16 shows an infrared graph of a second mixture having a hydrophobic agent and a crosslinker from a Fourier-transform infrared spectrometer.

### DETAILED DESCRIPTION

The present disclosure provides compositions and methods of producing sol-gels. Overall, sol-gels described herein can be temperature resistant up to 450 °F (232 °C), while maintaining corrosion resistance as hydrophobicity of the sol-gels remains stable at elevated temperatures. Indeed, hydrophobicity can increase after exposure to elevated temperatures of up to 450 °F (up to 232 °C), increasing water resistance and corrosion inhibition, while maintaining structural characteristics, *e.g*., strength. A sol-gel coating can remain transparent with minimal to no cracking or discoloration at elevated temperatures.

Sol-gels of the present disclosure can be homogenous or substantially homogenous, having limited and/or no metal oxides, which reduces cracking and discoloration of the sol-gel, while maintaining hydrophobicity to enhance longevity of the sol-gel. Sol-gels of the present disclosure can prevent discoloration and reduced corrosion inhibition when applied on metal and/or alloy substrates, when operating at temperatures up to 450 °F (232 °C) and subsequently cooling from the elevated temperature. The prevention of discoloration and increased corrosion inhibition can be due to an increase in the hydrophobicity, allowing for reduced water penetration, which reduces discoloration as light is not reflected along the cracks formed. Additionally, sol-gels of the present disclosure maintain an aesthetic appeal of the sol-gel as discoloration is reduced compared to conventional sol-gels. Sol-gels of the present disclosure can provide for enhanced structural integrity, hydrophobicity, and corrosion resistance of the film after operating at elevated temperatures, *e.g*., up to 450 °F (up to 232 °C).

Additionally, the limited and/or no metal oxides in a sol-gel allows for easier application, maintenance, and repair of the sol-gel as metal oxides increase the strength of the sol-gel, limiting repair capabilities. Accordingly, sol-gels of the present disclosure allow for increased repair capability, leading to decreases in cost for maintenance and repairs of sol-gel coatings, because there is limited or no metal oxides present. The sol-gel described herein can be free from chromates. Alternatively, the sol-gel described herein is free from chromates. The sol-gel described herein has the ability to involve only a 1-pot system, differing from conventional sol-gel coatings which require 2-part systems to form the sol-gel (having a corrosion inhibitor). This reduction and/or elimination of chromates and the 2-part system reduces cost, maintenance, and application challenges.

### Metal Substrate

A metal substrate includes a metal aircraft surface, which can include steel or an alloy having a major component, such as aluminum. The metal substrate can include a major component and a minor component, known as an intermetallic. Intermetallics, for example, can contain copper metal which can be prone to corrosion. The metal substrate can include an aluminum substrate. The metal substrate can include an aluminum substrate with an intermetallic of copper. As a non-limiting example, the metal substrate can be a 2024 aluminum substrate, 7075-T6 aluminum substrate, or a 7178 aluminum substrate.

### Sol-gel

The term "sol-gel," a contraction of solution-gelation, refers to a series of reactions wherein a soluble organic ligand (typically an organosilane) hydrolyzes to form an organosilane hydroxide. The organic ligands are tailored to correspond with the resin in the bonded structure. An inorganic acid, such as an acid halide, *e.g.,* hydrochloric acid, hydrobromic acid, thionyl chloride, propanoyl chloride, or benzoyl chloride, is added to the organosilane hydroxide to allow a water-based or alcohol-based, *e.g*., ethanol, system. Depending on reaction conditions, the organosilane polymers can condense or grow to form a silica network gel. The ratio of organics to inorganics in the polymer matrix can be controlled to adapt performance for a particular application.

Sol-gels of the present disclosure include a plurality of siloxane units represented by formula (I): 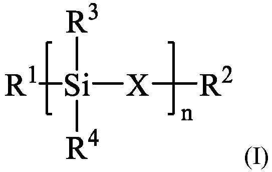 wherein X is an oxygen, R¹ is a hydrogen, oxygen, hydroxyl, or silane group, R² is a hydrogen, hydroxyl, or silane group, each of R³ and R⁴ is independently linear or branched C₁₋₂₀ alkyl, C₁₋₂₀ cycloalkyl, oxysilane, ether, epoxide, aryl alkylfluroide, cycloalkylfluoride, and arylfluoride groups, and n is 1 to 100. Alkyl includes linear or branched C₁₋₂₀ alkyl. C₁₋₂₀ alkyl includes methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, and icosanyl. Ether includes polyethylene glycol ether, polypropylene glycol ether, C₁-C₂₀ alkyl ether, aryl ether, and cycloalkyl ether. Alkylfluoride includes linear or branched C₁₋₂₀ alkyl having at least one fluorine atom. For example, sol-gels of the present disclosure can include two or more independent siloxane units represented by formula (II): 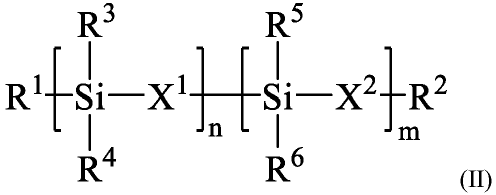 wherein X¹ and X² is an oxygen, R¹ is a hydrogen, oxygen, hydroxyl, or silane group, R² is a hydrogen, hydroxyl, or silane group, each of R³, R⁴, R⁵, and R⁶ is independently linear or branched C₁₋₂₀ alkyl, C₁₋₂₀ cycloalkyl, oxysilane, ether, epoxide, aryl alkylfluroide, cycloalkylfluoride, and arylfluoride groups, n is 1 to 100, and m is 1 to 100.

For example, sol-gels of the present disclosure can include three or more independent siloxane units represented by formula (III): 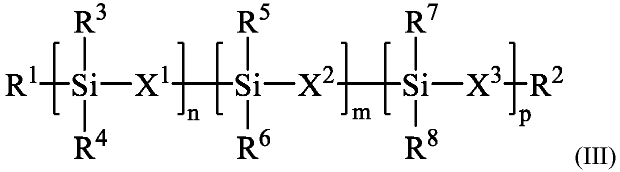 wherein X¹, X², and X³ is an oxygen, R¹ is a hydrogen, oxygen, hydroxyl, or silane group, R² is a hydrogen, hydroxyl, or silane group, each of R³, R⁴, R⁵, R⁶, R⁷, and R⁸ is independently linear or branched C₁₋₂₀ alkyl, C₁₋₂₀ cycloalkyl, oxysilane, ether, epoxide, aryl alkylfluroide, cycloalkylfluoride, and arylfluoride groups, n is 1 to 100, m is 1 to 100, and p is 1 to 100. For example, X¹ and X² are oxygen, R¹ is hydroxyl, R² is present and is a silane, R³, R⁴, R⁵ and R⁷ are oxysilanes, R⁶ is an alkene, R⁷ is an oxysilane, R⁸ is a C₉ alkylfluoride, n is 1 to 100, m is 1 to 100, and p is 1 to 100.

The siloxane units can polymerize to form a polymerized siloxane. The polymerized siloxane includes at least one of the R³, R⁴, R⁵, R⁶, R⁷, or R⁸ of a first siloxane unit represented by formula III be cross-linked to a R³, R⁴, R⁵, R⁶, R⁷, or R⁸ of a second siloxane unit represented by formula III. For example, an R⁵ of a first siloxane unit may cross-link or react with a second R⁵ of a second siloxane unit, forming a polymerized siloxane having the first siloxane unit and the second siloxane unit be covalently bound. The amount of cross-linking may vary based on the reactivity of the R groups on each of the plurality of siloxane units. For example, a polymerized siloxane may be represented by the formula (IV): 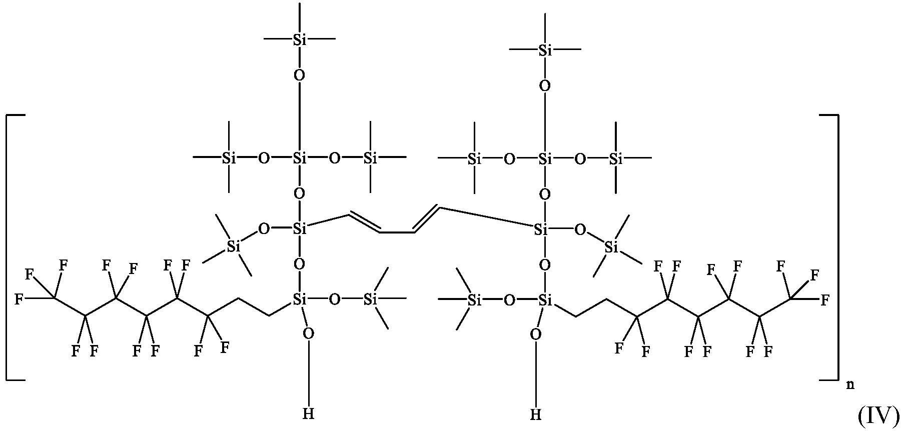 in which, n is 1 to 100.

A sol-gel can have a thickness of about 1 µm to about 10 µm, *e.g*., about 1 µm, about 2 µm, about 3 µm, about 4 µm, about 5 µm, about 6 µm, about 7 µm, about 8 µm, or about 10 µm. Alternatively, a sol-gel can have a thickness of 1 µm to 10 µm, *e.g.,* 1 µm, 2 µm, 3 µm, 4 µm, 5 µm, 6 µm, 7 µm, 8 µm, or 10 µm. A sol-gel can have a weight density of about 400 mg/ft² to about 800 mg/ft², *e.g*., about 400 mg/ft², about 500 mg/ft², about 500 mg/ft², about 600 mg/ft², about 700 mg/ft², or about 800 mg/ft². Alternatively a sol-gel can have a weight density of 400 mg/ft² to 800 mg/ft², *e.g.,* 400 mg/ft², 500 mg/ft², 500 mg/ft², 600 mg/ft², 700 mg/ft², or 800 mg/ft².

### Organosilane

A weight fraction (wt%) of organosilane in the sol-gel is from about 0.1 wt% to about 70 wt% by volume of the total sol-gel coating, such as from about 35 wt% to about 70 wt%, such as from about 45 wt% to about 65 wt%, such as from about 50 wt% to about 65 wt%, such as from about 55 wt% to about 60 wt%. Alternatively, a weight fraction (wt%) of organosilane in the sol-gel is from 0.1 wt% to 70 wt% by volume of the total sol-gel coating, such as from 35 wt% to 70 wt%, such as from 45 wt% to 65 wt%, such as from 50 wt% to 65 wt%, such as from 55 wt% to 60 wt%.

Organosilanes of the present disclosure are represented by formula (V): 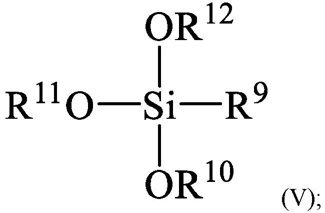 wherein:
each of R¹⁰, R¹¹, and R¹² is independently linear or branched C₁₋₂₀ alkyl. C₁₋₂₀ alkyl includes methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, and icosanyl;
R⁹ is selected from alkyl, cycloalkyl, ether, epoxide, and aryl. Alkyl includes linear or branched C₁₋₂₀ alkyl. C₁₋₂₀ alkyl includes methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, and icosanyl. Ether includes polyethylene glycol ether, polypropylene glycol ether, C₁-C₂₀ alkyl ether, aryl ether, and cycloalkyl ether.
Ether is selected from:

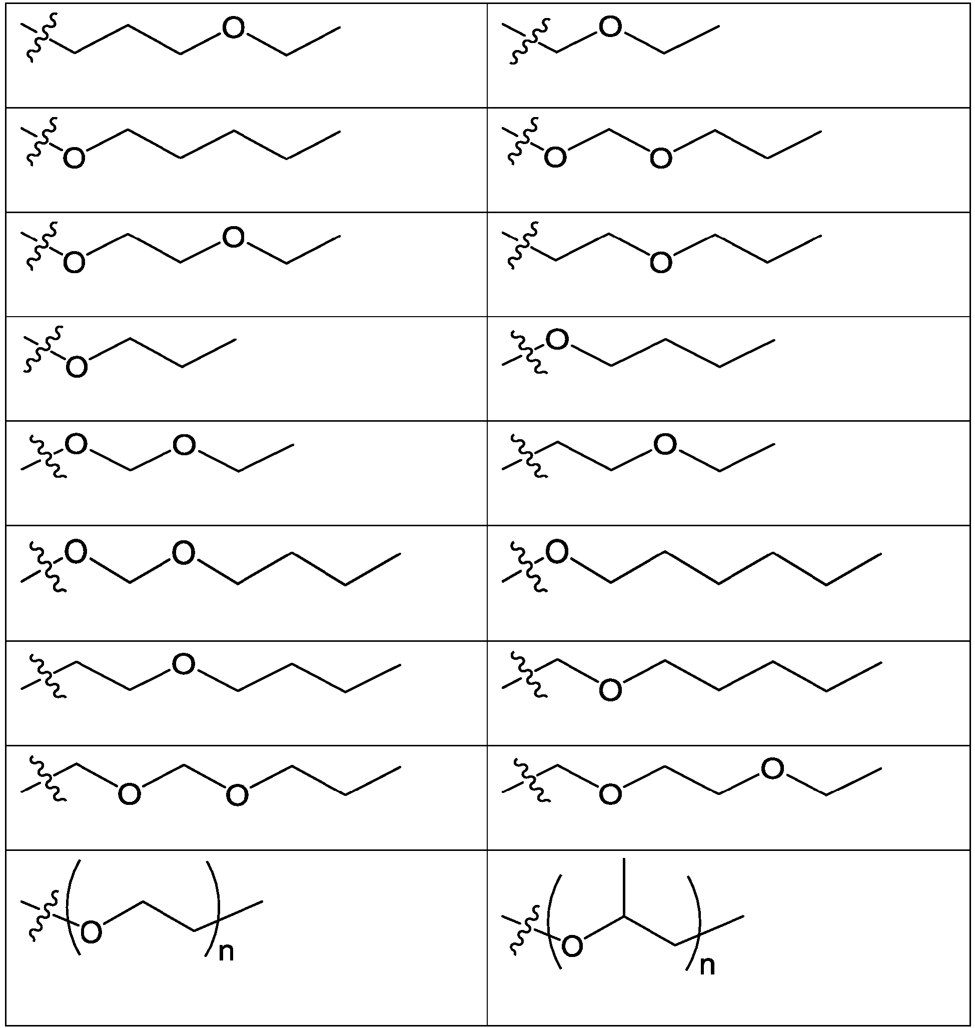

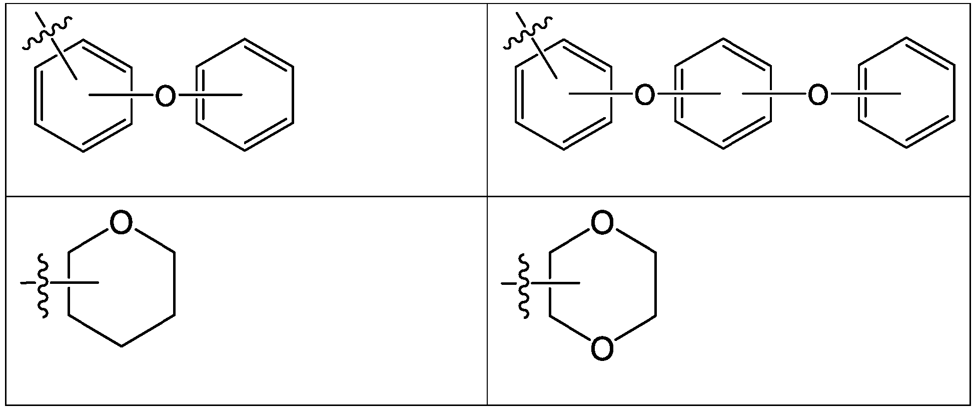

wherein n is a positive integer. In at least one example, n is a positive integer and the number average molecular weight (Mn) of the ether is from about 300 to about 500, such as from about 375 to about 450, such as from about 400 to about 425 or the number average molecular weight (Mn) of the ether is from 300 to 500, such as from 375 to 450, such as from 400 to 425.

The organosilane is represented by compound **1,** compound **2,** or compound **3:**

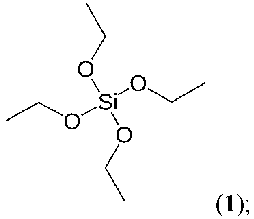

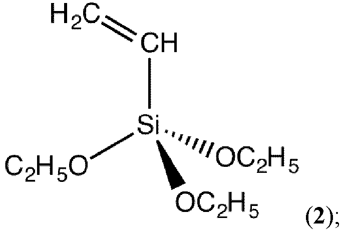

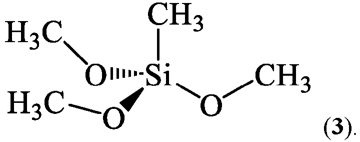

An organosilane is selected from 3-aminopropyltriethoxysilane, p-aminophenyltrimethoxysilane, p-aminophenyltriethoxysilane, allyltrimethoxysilane, allyltriethoxysilane, n-(2-aminoethyl)-3-aminopropyltrimethoxysilane, 3-aminopropyltriethoxysilane, 3-aminopropyltrimethoxysilane, 2-(3,4-epoxycyclohexyl)ethyltrimethoxysilane, 2-(3,4-epoxycyclohexyl)ethyltriethoxysilane, 3-mercaptopropyltrimethoxysilane, 3-mercaptopropyltriethoxysilane, 3-methacryloxypropylmethyldiethoxysilane, 3-methacryloxypropylmethyldimethoxysilane, 3-methacryloxypropyltrimethoxysilane, n-phenylaminopropyltrimethoxysilane, vinylmethyldiethoxysilane, vinyltriethoxysilane, methyltrimethoxysilane, tetraethylorthosilicate, vinyltrimethoxysilane, bis(trimethoxysilyl)ethane, bis(triethoxysilyl)ethane, bis[3-(trimethoxysilyl)propyl]amine, bis[3-(tnethoxysilyl)propyl]amine, bis[3-(triethoxysilyl)propyl] disulfide, bis[3-(trimethoxysilyl)propyl] disulfide, bis[3-(triethoxysilyl)propyl] trisulfide, bis[3-(trimethoxysilyl)propyl] trisulfide, bis[3-(triethoxysilyl)propyl] tetrasulfide, and bis[3-(trimethoxysilyl)propyl] tetrasulfide.

One or more organosilanes are included to form sol-gels of the present disclosure. At least a first organosilane and a second organosilane are included. For example, a first organosilane can include tetraethylorthosilicate and a second organosilane can include vinyltriethyoxysilane. The first organosilane is present in the sol-gel at a concentration of about 0.01 mol to about 1.0 mole, *e.g*., about 0.01 mol to about 5 mol, about 0.1 mol to about 2 mol, about 0.15 mol to about 1 mol, about 0.1 mol to about 0.2 mol, such as about 0.15 mol. The second organosilane is present in the sol-gel at a concentration of about 0.01 mol to about 1.0 mole, *e.g*., about 0.01 mol to about 5 mol, about 0.1 mol to about 2 mol, about 0.15 mol to about 1 mol, about 0.1 mol to about 0.2 mol, such as about 0.15 mol. A ratio of about 0.1:1 to about 10:1 of the first organosilane to the second organosilane exists, *e.g.,* about 0.1:1 to about 5:1, about 0.5:1 to about 4:1, about 1:1 to about 3:1, about 1.5:1 to about 2.5:1, such as about 2:1. An organosilane of the present disclosure provides a sol-gel capable of operating at temperatures of up to 450 °F (up to 232 °C) without exhibiting discoloration and/or cracking. Without being bound by theory, a ratio of about 1:1 to about 2:1 of a first organosilane and a second organosilane can provide a sol-gel that is capable of operating at temperatures of up to 450 °F (up to 232 °C) due to the crosslinking between the first organosilane and the second organosilane. Additionally, it was discovered that a ratio of about 1:1 to about 2:1 prevented precipitation, was transparent with minimal hazing, and increased heat resistance as compared to alternative ratios of organosilanes. The organosilanes of the present disclosure also allow for increased organic content of the sol-gel, allowing for thicker depositions of the sol-gel while reducing the propensity for cracking compared to conventional sol-gels.

Alternatively, one or more organosilanes are included to form sol-gels of the present disclosure. At least a first organosilane and a second organosilane are included. For example, a first organosilane can include tetraethylorthosilicate and a second organosilane can include vinyltriethyoxysilane. The first organosilane is present in the sol-gel at a concentration of 0.01 mol to 1.0 mole, *e.g.,* 0.01 mol to 5 mol, 0.1 mol to 2 mol, 0.15 mol to 1 mol, 0.1 mol to 0.2 mol, such as 0.15 mol. The second organosilane is present in the sol-gel at a concentration of 0.01 mol to 1.0 mole, *e.g.,* 0.01 mol to 5 mol, 0.1 mol to 2 mol, 0.15 mol to 1 mol, 0.1 mol to 0.2 mol, such as 0.15 mol. A ratio of 0.1:1 to 10:1 of the first organosilane to the second organosilane exists, *e.g.,* 0.1:1 to 5:1, 0.5:1 to 4:1, 1:1 to 3:1, 1.5:1 to 2.5:1, such as 2:1. An organosilane of the present disclosure provides a sol-gel capable of operating at temperatures of up to 450 °F (up to 232 °C) without exhibiting discoloration and/or cracking. Without being bound by theory, a ratio of 1:1 to 2:1 of a first organosilane and a second organosilane can provide a sol-gel that is capable of operating at temperatures of up to 450 °F (up to 232 °C) due to the crosslinking between the first organosilane and the second organosilane. Additionally, it was discovered that a ratio of 1:1 to 2:1 prevented precipitation, was transparent with minimal hazing, and increased heat resistance as compared to alternative ratios of organosilanes. The organosilanes of the present disclosure also allow for increased organic content of the sol-gel, allowing for thicker depositions of the sol-gel while reducing the propensity for cracking compared to conventional sol-gels.

### Acid Catalyst

An acid catalyst used to form sol-gels of the present disclosure increases a hydrolysis reaction rate as well as pH reduction of the sol-gel. The pH value of the sol-gel (and composition that forms the sol-gel) can be controlled by use of the acid catalyst. Acid catalysts of the present disclosure include inorganic acids, such as acid halides. Acid halides include such as hydrochloric acid, hydrobromic acid, thionyl chloride, propanoyl chloride, or benzoyl chloride.

A pH of a sol-gel of the present disclosure is from about 2 to about 5, such as about 3 to about 4. The acid catalyst is present in the sol-gel at a concentration of about 0.01 mol to about 1.0 mole, *e.g*., about 0.01 mol to about 5 mol, about 0.1 mol to about 2 mol, about 0.15 mol to about 1 mol, about 0.1 mol to about 0.2 mol, such as about 0.15 mol. A ratio of acid catalyst to organosilane in a sol-gel can be from about 0.5:1 to about 2:1, *e.g.,* about 0.5:1 to about 1.5:1, about 1:1 to about 1.5:1, or about 0.8:1 to about 1.8:1. For example, the first organosilane in a sol-gel is about 0.1 mol and the acid catalyst is about 0.1 mol. As a further example, the second organosilane in a sol-gel is about 0.05 mol and the acid catalyst is about 0.1 mol.

Alternatively, a pH of a sol-gel of the present disclosure is from 2 to 5, such as 3 to 4. The acid catalyst is present in the sol-gel at a concentration of 0.01 mol to 1.0 mole, *e.g.,* 0.01 mol to 5 mol, 0.1 mol to 2 mol, 0.15 mol to 1 mol, 0.1 mol to 0.2 mol, such as 0.15 mol. A ratio of acid catalyst to organosilane in a sol-gel can be from 0.5:1 to 2:1, *e.g.,* 0.5:1 to 1.5:1, 1:1 to 1.5:1, or 0.8:1 to 1.8:1. For example, the first organosilane in a sol-gel is 0.1 mol and the acid catalyst is 0.1 mol. As a further example, the second organosilane in a sol-gel is 0.05 mol and the acid catalyst is 0.1 mol.

Without being bound by theory, it is believed that acid catalyst in these ratios not only contributes to increasing a reaction rate for hydrolysis, but also protonates thiol moieties of a corrosion inhibitor, which reduces or prevents reaction of the corrosion inhibitor with other components of the sol-gel.

### Hydrophobic agent

A hydrophobic agent useful to form sol-gels of the present disclosure provides hydrophobicity of the sol-gel, preventing water from penetrating the sol-gel to contact the metal substrate. The hydrophobic agents of the present disclosure are organic or inorganic compounds having one or more fluorine groups. Without being bound by theory the fluorine groups act to increase the hydrophobicity of the sol-gel due to the arrangement of the fluorine in the sol-gel, which produces a net zero dipole interaction and leads to poor van der Waals interactions with water.

A hydrophobic agent of the present disclosure is an organic compound that includes a fluoride group. For example, hydrophobic agents of the present disclosure are represented by formula Si(OR')₃R*, wherein each R' is independently linear or branched C₁₋₂₀ alkyl. C₁₋₂₀ alkyl includes methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, and icosanyl, and R* is selected from alkylfluroide, cycloalkylfluoride, and arylfluoride groups. Alkylfluoride includes linear or branched C₁₋₂₀ alkyl having at least one fluorine atom. C₁₋₂₀ alkyl includes methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, and icosanyl. For example, the hydrophobic agent can include perfluorooctyltriethoxysilane.

A weight fraction (wt%) of hydrophobic agent by volume in the total sol-gel is from about 1 wt% to about 8 wt%, *e.g*., about 2 wt% to about 5 wt%, about 2 wt% to about 4 wt%, about 2 wt% to about 3 wt%, such as about 2 wt%. For example, a sol-gel can have about 2 wt% of hydrophobic agent by volume in the total sol-gel, about 33 wt% of a first organosilane, and about 15 wt% of a second organosilane. Alternatively, a weight fraction (wt%) of hydrophobic agent by volume in the total sol-gel is from 1 wt% to 8 wt%, *e.g.,* 2 wt% to 5 wt%, 2 wt% to 4 wt%, 2 wt% to 3 wt%, such as 2 wt%. For example, a sol-gel can have 2 wt% of hydrophobic agent by volume in the total sol-gel, 33 wt% of a first organosilane, and 15 wt% of a second organosilane. The hydrophobic agent incorporated into the sol-gel increases the hydrophobicity of the sol-gel, increasing a water contact angle, and reducing water penetration to the metal substrate. Additionally, this will promote corrosion protection and maintain longevity as minimal to no cracks in the sol-gel form when heating the sol-gel up to 450 °F (up to 232 °C).

### Corrosion Inhibitor

A corrosion inhibitor useful to form sol-gels of the present disclosure provides corrosion resistance (to water) of the metal substrate disposed adjacent the sol-gel. Corrosion inhibitors of the present disclosure are compounds having one or more thiol moieties. Metal aircraft surfaces can comprise steel or an alloy having a major component, such as aluminum, and a minor component, known as an intermetallic. Intermetallics, for example, often contain copper metal which is prone to corrosion. Without being bound by theory, it is believed that the interaction of thiol moieties of a corrosion inhibitor of the present disclosure with copper-containing intermetallics on a metal surface (such as an aluminum alloy surface) prevents corrosion of the metal surface. More specifically, interaction of the thiol moieties of a corrosion inhibitor of the present disclosure with the intermetallics blocks reduction of the intermetallics by slowing the rate of oxygen reduction and decreasing oxidation of a metal alloy, such as an aluminum alloy.

A corrosion inhibitor of the present disclosure is an organic compound that includes a disulfide group and/or a thiolate group (e.g., a metal-sulfide bond). For example, the corrosion inhibitor is not an organometallic corrosion inhibitor. A corrosion inhibitor is represented by the formula: R¹--Sₙ--X--R², wherein R¹ is an organic group, n is an integer greater than or equal to 1, X is a sulfur or a metal atom, and R² is an organic group. One or both of R¹ and R² can include additional polysulfide groups and/or thiol groups. Furthermore, corrosion inhibitors include polymers having the formula -(R¹--Sₙ--X--R²)_{q}-, wherein R¹ is an organic group, n is a positive integer, X is a sulfur or a metal atom, R² is an organic group, and q is a positive integer. R¹ and R² (of a polymeric or monomeric corrosion inhibitor) is independently selected from H, alkyl, cycloalkyl, aryl, thiol, polysulfide, or thione. Each of R¹ and R² can be independently substituted with a moiety selected from alkyl, amino, phosphorous-containing, ether, alkoxy, hydroxy, sulfur-containing, selenium, or tellurium. Each of R¹ and R² has 1-24 carbon atoms and/or non-hydrogen atoms. For example, heterocyclic examples of R¹ and R² groups include an azole, a triazole, a thiazole, a dithiazole, and/or a thiadiazole.

A corrosion inhibitor includes a metal in a metal-thiolate complex. Corrosion inhibitors can include a metal center and one or more thiol groups (ligands) bonded and/or coordinated with the metal center with a metal-sulfide bond. A thiolate is a derivative of a thiol in which a metal atom replaces the hydrogen bonded to sulfur. Thiolates have the general formula M-S--R', wherein M is a metal and R¹ is an organic group. R¹ can include a disulfide group. Metal-thiolate complexes have the general formula M-(S--R¹)ₙ, wherein n generally is an integer from 2 to 9 and M is a metal atom. Metals are copper, zinc, zirconium, aluminum, iron, cadmium, lead, mercury, silver, platinum, palladium, gold, and/or cobalt.

The corrosion inhibitor includes an azole compound. Examples of suitable azole compounds include cyclic compounds having, 1 nitrogen atom, such as pyrroles, 2 or more nitrogen atoms, such as pyrazoles, imidazoles, triazoles, tetrazoles and pentazoles, 1 nitrogen atom and 1 oxygen atom, such as oxazoles and isoxazoles, and 1 nitrogen atom and 1 sulfur atom, such as thiazoles and isothiazoles. Nonlimiting examples of suitable azole compounds include 2,5-dimercapto-1,3,4-thiadiazole, 1H-benzotriazole, 1H-1,2,3-triazole, 2-amino-5-mercapto-1,3,4-thiadiazole, also named 5-amino-1,3,4-thiadiazole-2-thiol, 2-amino-1,3,4-thiadiazole. For example, and without limitation, the azole can be 2,5-dimercapto-1,3,4-thiadiazole. The azole can be present in the composition at a concentration of 0.01 g/L of sol-gel composition to 1 g/L of sol-gel composition, for example, 0.4 g/L of sol-gel composition. The azole compound can include benzotriazole and/or 2,5-dimercapto-1,3,4-thiadiazole.

Corrosion inhibitors of the present disclosure include heterocyclic thiol and amines, which can provide elimination of oxygen reduction. Heterocyclic thiols include thiadiazoles having one or more thiol moieties. Non-limiting examples of thiadiazoles having one or more thiol moieties include 1,3,4-thiadiazole-2,5-dithiol and thiadiazoles represented by formula (VI) or formula (VII):

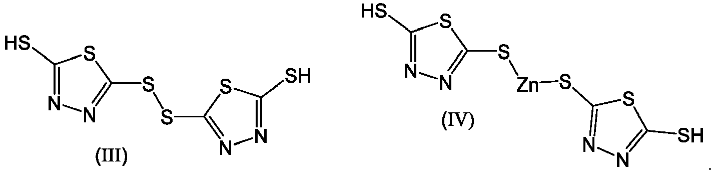

The thiadazole of formula (VI) can be purchased from Vanderbilt Chemicals, LLC (of Norwalk, Connecticut) and is known as Vanlube^{®} 829. The thiadiazole of formula (VII) can be purchased from WPC Technologies, Inc.^{™} (of Oak Creek, Wisconsin) and is known as InhibiCor^{™} 1000.

A corrosion inhibitor of the present disclosure can be a derivative of 2,5-dimercapto-1,3,4 thiadiazole symbolized by HS-CN₂SC-SH or "DMTD", and of selected derivatives of trithiocyanuric acid ("TMT") used for application as a corrosion inhibitor in connection with a paint. Examples include 2,5 - dimercapto-1,3,4 thiadiazole (DMTD), and 2,4-dimercapto-s-triazolo-[4,3-b]-1,3-4-thiadiazole, and trithiocyanuric acid (TMT). Other examples include N-,S- and N,N-, S,S- and N,S-substituted derivatives of DMTD such as 5-mercapto-3-phenil-1,3,4-thiadiazoline-2-thione or bismuthiol II (3-Phenyl-1,3,4-thiadiazolidine-2,5-dithione) and various S-substituted derivatives of trithiocyanuric acid. Other examples include 5,5' dithio-bis (1,3,4 thiadiazole-2(3H)-thione or (DMTD)₂, or (DMTD), the polymer of DMTD; 5,5' thio-bis (1,3,4 thiadiazole-2(3H)-thione; or (TMT)₂, the dimer and polymers of TMT. Other examples include salts of DMTD of the general formula: M(DMTD)ₙ, where n=1, 2 or 3, and M is a metal cation such as M=Zn(II), Bi(III), Co(II), Ni(II), Cd(II), Pb(II), Ag(I), Sb(III), Sn(II), Fe(II), or Cu(II) (examples: ZnDMTD, Zn(DMTD)₂, Bi(DMTD)₃); similar salts of TMT, as for example, ZnTMT, in a ratio of 1: 1; and, also, the comparable soluble Li(I), Ca(II), Sr(II), Mg(II), La(III), Ce(III), Pr(III), or Zr(IV) salts. Additional examples include salts of (DMTD)ₙ of general formula M[(DMTD)ₙ]ₘ, where n=2 or n>2, m=1, 2, or 3 and M is a metal cation such as M=Zn(II), Bi(III), Co(II), Ni(II), Cd(II), Pb(II), Ag(I), Sb(III), Sn(II), Fe(II), or Cu(II). Typical examples are: Zn[(DMTD)₂], Zn[(DMTD)₂]₂.

Additional examples include ammonium-, aryl-, or alkyl-ammonium salts of DMTD, (DMTD)ₙ, or 5,5' thio-bis (1,3,4 thiadiazole-2(3H)-thione or 2,4-dimercapto-s-triazolo-[4,3-b]-1,3-4-thiadiazole. Typical examples include: Cyclohexyl amine: DMTD, in ratios of 1:1 and 2: 1; Di-cyclohexyl amine: DMTD, in ratios of 1:1 and 2:1; Aniline: DMTD, in ratios of 1:1 and 2:1; similar salts of TMT, as for example Di-cyclohexyl amine: TMT, in a ratio of 1:1. Additional examples include poly-ammonium salts of DMTD or (DMTD)ₙ and TMT formed with polyamines.

Additional examples include inherently conductive polyaniline doped with DMTD or (DMTD)₂ or 5,5' thio-bis (1,3,4 thiadiazole-2(3H)-thione and TMT; Inherently conductive polypyrrole and/or polythiophene doped with DMTD, (DMTD)₂ and 5,5' thio-bis (1,3,4 thiadiazole-2(3H)-thione and/or TMT.

Additional examples include micro or nano composites of poly DMTD/polyaniline, poly DMTD/polypyrrole, and poly DMTD/polythiophene; similar micro or nano composites with TMT; and with 5,5' thio-bis (1,3,4 thiadiazole-2(3H)-thione; DMTD or salts of DMTD or derivatives of DMTD and of TMT, as organic constituents of various pigment grade inorganic matrixes or physical mixtures. Such inorganic matrixes can include non-toxic anionic and cationic species with corrosion inhibitor properties, such as: MoO₄⁻, PO₄⁻, HPO₃⁻, poly-phosphates, BO₂⁻, SiO₄⁻, NCN⁻, WO₄⁻, phosphomolybdate, phosphotungstate and respectively, Mg, Ca, Sr, La, Ce, Zn, Fe, Al, Bi.

Additional examples include DMTD or salts of DMTD or derivatives of DMTD and TMT in encapsulated forms, such as: inclusions in various polymer matrices, or as cyclodextrin-inclusion compounds or in microencapsulated form.

Pigment grade forms of DMTD include Zn(DMTD)₂ and Zn-DMTD (among other organic and inorganic salts of the former) with inorganic products or corrosion inhibitor pigments, such as: phosphates, molybdates, borates, silicates, tungstates, phosphotungstates, phosphomolybdates, cyanamides or carbonates of the previously specified cationic species, as well as oxides. Examples include: zinc phosphate, cerium molybdate, calcium silicate, strontium borate, zinc cyanamide, cerium phosphotungstate, ZnO, CeO₂, ZrO₂, and amorphous SiO₂.

A corrosion inhibitor is a lithium ion, and a counter ion, which can include various ions known to form salts with lithium. Non-limiting examples of counter ions suitable for forming a salt with lithium include carbonates, hydroxides and silicates (e.g., orthosilicates and metasilicates). For example, the corrosion inhibitor includes a lithium carbonate salt, a lithium hydroxide salt, or a lithium silicate salt (e.g., a lithium orthosilicate salt or a lithium metasilicate salt). The counter ion includes various ions known to form salts with the other Group IA (or Group 1) metals (e.g., Na, K, Rb, Cs and/or Fr). Nonlimiting examples of counter ions suitable for forming a salt with the alkali metals include carbonates, hydroxides and silicates (e.g., orthosilicates and metasilicates). For example, and without limitation, the corrosion inhibitor includes an alkali metal carbonate salt, an alkali metal hydroxide salt, and/or an alkali metal silicate salt (e.g. an alkali metal orthosilicate salt or an alkali metal metasilicate salt). For example, some examples of suitable salts include carbonates, hydroxides and silicates (e.g., orthosilicates or metasilicates) of sodium, potassium, rubidium, cesium, and francium.

A weight fraction (wt%) of corrosion inhibitor by volume in the total sol-gel is from about 1 wt% to about 10 wt%, such as from about 3 wt% to about 10 wt%, such as from about 1 wt% to about 5 wt%, such as from about 5 wt% to about 10 wt%, for example about 1 wt%, about 5 wt%, or about 10 wt%. Alternatively, a weight fraction (wt%) of corrosion inhibitor by volume in the total sol-gel is from 1 wt% to 10 wt%, such as from 3 wt% to 10 wt%, such as from 1 wt% to 5 wt%, such as from 5 wt% to 10 wt%, for example 1 wt%, 5 wt%, or 10 wt%. The corrosion inhibitor incorporated into the sol-gel can provide an additional layer of corrosion protection adjacent to the metal surface. When combined with the hydrophobicity of the sol-gel of the present disclosure, enhanced water prevention and corrosion resistance occurs.

### Top Coating

A top coat of the present disclosure can be disposed on the primer coating to form sol-gels of the present disclosure having corrosion resistance (to water) of the metal substrate disposed adjacent the sol-gel. The top coat can include an organic top coat such as a polymeric coating (*e.g*., an epoxy coating, and/or a urethane coating), a polymeric material, a composite material (*e.g*., a filled composite and/or a fiber-reinforced composite), a laminated material, or mixtures thereof. The top coating includes at least one of a resin, a thermoset polymer, a thermoplastic polymer, an epoxy, a lacquer, a polyurethane, a polyester, or combination(s) thereof. For example, and without limitation, the top coat is a polyurethane. The polyurethane top coat prevents water permeability through the coating to allow for increased corrosion protection. The top coat can have a thickness of about 2 mils to about 3 mils, *e.g*., about 2.1 mils to about 2.9 mils, such as about 2 mils, about 2.1 mils, about 2.2 mils, about 2.3 mils, about 2.4 mils, about 2.5 mils, about 2.6 mils, about 2.7 mils, about 2.8 mils, about 2.9 mils, about 3 mils, or the like. For example, and without limitation, the top coat has a thickness of about 2 mils to about 3 mils and the primer has a thickness of about 0.3 mils to about 2.5 mils. Alternatively, the top coat can have a thickness of 2 mils to 3 mils, *e.g.,* 2.1 mils to 2.9 mils, such as 2 mils, 2.1 mils, 2.2 mils, 2.3 mils, 2.4 mils, 2.5 mils, 2.6 mils, 2.7 mils, 2.8 mils, 2.9 mils, 3 mils, or the like. For example, and without limitation, the top coat has a thickness of 2 mils to 3 mils and the primer has a thickness of 0.3 mils to 2.5 mils. Equivalently, the top coat can have a thickness of about 50 µm to about 75 µm, *e.g*., about 53 µm to about 74 µm, such as about 50 µm, about 53 µm, about 56 µm, about 58 µm, about 61 µm, about 64 µm, about 66 µm, about 69 µm, about 71 µm, about 74 µm, about 75 µm, or the like. For example, and without limitation, the top coat has a thickness of about 50 µm to about 75 µm and the primer has a thickness of about 7 µm to about 64 µm. Alternatively, the top coat can have a thickness of 50 µm to 75 µm, *e.g.,* 53 µm to 74 µm, such as 50 µm, 53 µm, 56 µm, 58 µm, 61 µm, 64 µm, 66 µm, 69 µm, 71 µm, 74 µm, 75 µm, or the like. For example, and without limitation, the top coat has a thickness of 50 µm to 75 µm and the primer has a thickness of 7 µm to 64 µm.

### Sol-gel systems

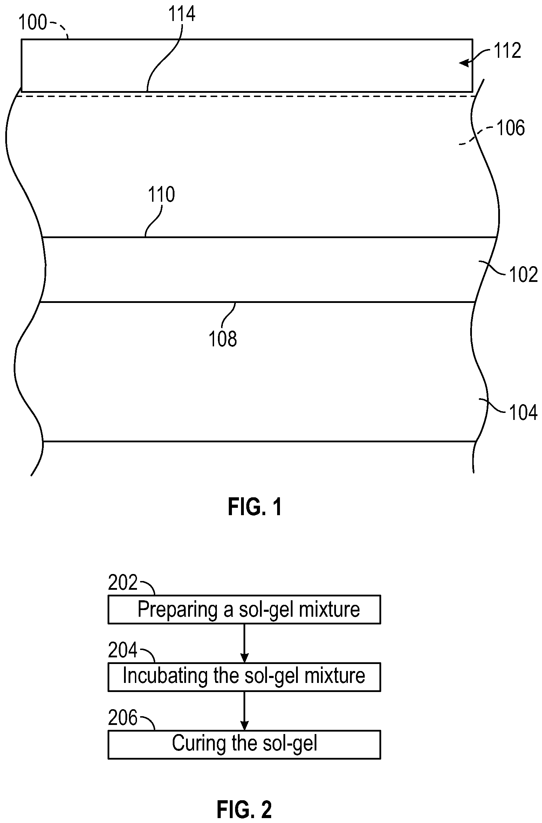

Figure 1 is a side view of a corrosion-inhibiting sol-gel disposed on a substrate. A corrosion-inhibiting sol-gel system 100 includes a sol-gel 102 disposed on a material substrate 104. In some examples, it was recognized that sol-gel 102 has heat resistance properties due to the ratio of a first organosilane and the second organosilane, which provides heat resistance due to crosslinking of the first organosilane and the second organosilane. Additionally, it was discovered that a ratio of about 1:1 to about 2:1 (or 1:1 to 2:1) prevented precipitation, was transparent with minimal hazing, and increased heat resistance as compared to alternative ratios of organosilanes._Sol-gel 102 has corrosion inhibiting properties due to the hydrophobicity of the organosilane and the hydrophobic agent, which provide corrosion protection of material substrate 104. Sol-gel 102 promotes adherence between metal substrate 104 and a secondary layer 106. Secondary layer 106 can be a sealant, adhesive, primer or paint, which can be deposited onto sol-gel 102 by, for example, spray drying.

Material substrate 104 can be any suitable material described herein and/or can include any suitable structure that benefits from sol-gel 102 being disposed thereon. Material substrate 104 can define one or more components (such as structural or mechanical components) of environmentally exposed apparatuses, such as aircraft, watercraft, spacecraft, land vehicles, equipment, civil structures, fastening components, wind turbines, and/or another apparatus susceptible to environmental degradation. Material substrate 104 can be part of a larger structure, such as a vehicle component. A vehicle component is any suitable component of a vehicle, such as a structural component, such as landing gears, a panel, or joint, of an aircraft, etc. Examples of a vehicle component include a rotor blade, landing gears, an auxiliary power unit, a nose of an aircraft, a fuel tank, a tail cone, a panel, a coated lap joint between two or more panels, a wing-to-fuselage assembly, a structural aircraft composite, a fuselage body-joint, a wing rib-to-skin joint, and/or other internal component. Material substrate 104 can be made of at least one of aluminum, aluminum alloy, magnesium, magnesium alloy, nickel, iron, iron alloy, steel, titanium, titanium alloy, copper, and copper alloy, as well as glass/silica and other inorganic or mineral substrates. Material substrate 104 is made of steel. Material substrate 104 can be a "bare" substrate, having no plating (unplated metal), conversion coating, and/or corrosion protection between material substrate 104 and sol-gel 102. Additionally or alternatively, material substrate 104 can include surface oxidization and/or hydroxylation. Hence, sol-gel 102 can be directly bonded to material substrate 104 and/or to a surface oxide layer on a surface of material substrate 104. The material is not water sensitive, but a sol-gel disposed on the material is capable of protecting other adjacent structures that might be water sensitive.

Secondary layer 106 is disposed on a second surface 110 of sol-gel 102 opposite first surface 108 of sol-gel 102. Sol-gel 102 can have a thickness that is less than the thickness of material substrate 104. Sol-gel 102 can have a thickness that is more than the thickness of material substrate 104. Sol-gel 102 has a thickness that is about 1 µm to about 10 µm, *e.g*., about 1 µm, about 2 µm, 3 µm, about 4 µm, about 5 µm, about 6 µm, about 7 µm, about 8 µm, or about 10 µm (or 1 µm, 2 µm, 3 µm, 4 µm, 5 µm, 6 µm, 7 µm, 8 µm, or 10 µm). Thinner coatings can have fewer defects (more likely to be defect free), while thicker coatings can provide more abrasion, electrical, and/or thermal protection to the underlying material substrate 104.

Secondary layer 106 includes organic material (*e.g*., organic chemical compositions) configured to bind and/or adhere to sol-gel 102. Secondary layer 106 includes a paint, a primer, a top coat, a polymeric coating (*e.g.*, an epoxy coating, and/or a urethane coating), a polymeric material, a composite material (*e.g*., a filled composite and/or a fiber-reinforced composite), a laminated material, or mixtures thereof. Secondary layer 106 includes at least one of a polymer, a resin, a thermoset polymer, a thermoplastic polymer, an epoxy, a lacquer, a polyurethane, and a polyester. Secondary layer 106 can additionally include at least one of a pigment, a binder, a surfactant, a diluent, a solvent, a particulate (*e.g*., mineral fillers), corrosion inhibitors, and fibers (*e.g*., carbon, aramid, and/or glass fibers).

Tertiary layer 112 is disposed on a proximal surface 114 of secondary layer 106 opposite second surface 110 of sol-gel 102. Tertiary layer 112 includes organic material (*e.g*., organic chemical compositions) configured to bind and/or adhere to secondary layer 106. Tertiary layer 112 includes a paint, a primer, a top coat, a polymeric coating (*e.g*., an epoxy coating, and/or a urethane coating), a polymeric material, a composite material (*e.g*., a filled composite and/or a fiber-reinforced composite), a laminated material, or mixtures thereof. Tertiary layer 112 includes at least one of a polymer, a resin, a thermoset polymer, a thermoplastic polymer, an epoxy, a lacquer, a polyurethane, and a polyester. Tertiary layer 112 can additionally include at least one of a pigment, a binder, a surfactant, a diluent, a solvent, a particulate (*e.g*., mineral fillers), corrosion inhibitors, and fibers (*e.g*., carbon, aramid, and/or glass fibers).

### Methods of Forming Sol-gel

Methods of forming a sol-gel of the present disclosure include mixing a first organosilane and a second organosilane in an organic solvent, such as an anhydrous organic solvent, *e.g.,* ethanol, followed by stirring for from about 1 minute to about 1 hour (or 1 minute to 1 hour), such as about 10 minutes (or 10 minutes). Additional solvent (e.g., distilled water) is then added to the organosilane mixture. A hydrophobic agent is added to the mixture in an amount of about 1 wt% of the mixture to about 8 wt% of the mixture (1 wt% of the mixture to 8 wt% of the mixture), followed by stirring for from about 1 minute to about 24 hours (or from 1 minute to 24 hours) at room temperature. An acid catalyst is then added to the mixture and stirred for from about 1 minute to about 1 hour (or from 1 minute to 1 hour), such as about 30 minutes (or 30 minutes), until the pH of the solution becomes about 2 to about 4, *e.g.,* about 3 (or 2 to 4, *e.g.,* 3). A corrosion inhibitor is then introduced and mixed for about 1 hour to about 24 hours (or for 1 hour to 24 hours). The mixture can be deposited onto a material substrate. The deposited mixture can be cured at ambient temperature or can be heated to increase the rate of curing/sol-gel formation, *e.g.,* cured at about 100 °C for about 1 hour to about 12 hours (or cured at 100 °C for 1 hour to 12 hours).

Figure 2 is a flow chart illustrating a method 200 of forming a sol-gel 102. As shown in Figure 2, sol-gel 102 can be formed by mixing 202 one or more sol-gel components. Sol-gel components include two or more of organosilane, acid catalyst, hydrophobic agent, and a corrosion inhibitor. Generally, mixing 202 is performed by combining the sol-gel formulation components (*e.g*., dispersing, emulsifying, suspending, and/or dissolving) in an organic solvent, such as an anhydrous organic solvent, or water, and optionally stirring the sol-gel formulation.

Mixing 202 includes mixing the sol-gel components to form a sol-gel mixture (*e.g*., a solution, a mixture, an emulsion, a suspension, and/or a colloid). Mixing 202 includes mixing all sol-gel components together concurrently. Alternatively, mixing 202 includes mixing any two components (*e.g*., a first organosilane and second organosilane in an organic solvent) to form a first mixture and then mixing the remaining components into the first mixture to form a second mixture. The first mixture and second mixture each have a water content from about 5 wt% of water to the mixture to about 15 wt% of water to the mixture, such as from about 5 wt% to about 12 wt%, such as from about 5 wt% to about 10 wt%, such as from about 5 wt% to about 8 wt%, such as about 8 wt% to about 10 wt%. The first mixture and second mixture each have an ethanol content from about 20 wt% of ethanol to the mixture to about 30 wt% of water to the mixture, such as from about 21 wt% to about 29 wt%, such as from about 21 wt% to about 25 wt%, such as from about 21 wt% to about 24 wt%, or such as about 21 wt% to about 27 wt%. Alternatively, the first mixture and second mixture each have a water content from 5 wt% of water to the mixture to 15 wt% of water to the mixture, such as from 5 wt% to 12 wt%, such as from 5 wt% to 10 wt%, such as from 5 wt% to 8 wt%, such as 8 wt% to 10 wt%. The first mixture and second mixture each have an ethanol content from 20 wt% of ethanol to the mixture to 30 wt% of water to the mixture, such as from 21 wt% to 29 wt%, such as from 21 wt% to 25 wt%, such as from 21 wt% to 24 wt%, or such as 21 wt% to 27 wt%.

Mixing 202 can include dissolving, suspending, emulsifying, and/or dispersing the sol-gel components in an organic solvent before mixing with one or more of the other sol-gel components. Examples of solvents for dissolving, suspending, emulsifying, and/or dispersing sol-gel components include one or more of alcohol (*e.g*., ethanol or propanol), ethylene glycol, propylene glycol, polyethylene glycol, polypropylene glycol, ether (*e.g*., dimethyl ether or dipropylene glycol dimethyl ether), glycol ether, tetrahydrofuran (THF), N-methyl-2-pyrrolidone (NMP), and dimethyl sulfoxide (DMSO).

Additionally or alternatively, mixing 202 can include mixing one or more of the sol-gel components as a solid, an aggregate, and/or a powder with one or more of the other sol-gel components. Where, for example, mixing 202 includes mixing solids, powders, and/or viscous liquids, mixing 202 can include mixing with a high-shear mixer (*e.g*., a paint shaker or a planetary-centrifugal mixer or stirrer). A high-shear mixer can be advantageous to break and/or to finely disperse solids to form a uniform or substantially uniform mixture. For example, a high-shear mixer can dissolve, suspend, emulsify, disperse, homogenize, deagglomerate, and/or disintegrate solids into the sol-gel formulation.

The sol-gel components during mixing 202 can be diluted to control self-condensation reactions and thus increase the pot life of the mixed sol-gel formulation. Mixing 202 can include forming a concentration ratio of (first organosilane + second organosilane + acid catalyst to the mixture) in the mixture from about 0.1:1:0.1 to about 10:1:10 (or 0.1:1:0.1 to 10:1:10) of the first organosilane to second organosilane to acid catalyst in the solution. For example, a ratio of 2:1:2 may exist for a first organosilane to second organosilane to acid catalyst.

Mixing 202 can include forming a weight percent (wt%) by volume of the hydrophobic agent inhibitor in the mixture from about 1 wt% to about 8 wt%, such as from about 2 wt% to about 5 wt%, such as from about 2 wt% to about 4 wt%, such as from about 2 wt% to about 3 wt%. Alternatively, mixing 202 can include forming a weight percent (wt%) by volume of the hydrophobic agent inhibitor in the mixture from 1 wt% to 8 wt%, such as from 2 wt% to 5 wt%, such as from 2 wt% to 4 wt%, such as from 2 wt% to 3 wt%. A sol-gel formulation can contain a corrosion inhibitor and mixing 202 includes forming a weight percent (wt%) of (first organosilane + second organosilane + acid catalyst + hydrophpobic agent + corrosion inhibitor to the mixture) in the mixture from about 0.3 wt% to about 50 wt% of corrosion inhibitor to the mixture, such as from about 1 wt% to about 45 wt%, such as from about 2 wt% to about 40 wt%, such as from about 3 wt% to about 35 wt%, such as from about 4 wt% to about 25 wt%, such as from about 8 wt% to about 22 wt%, for example about 10 wt%, about 12 wt%, about 15 wt%. Alternatively, a sol-gel formulation can contain a corrosion inhibitor and mixing 202 includes forming a weight percent (wt%) of (first organosilane + second organosilane + acid catalyst + hydrophpobic agent + corrosion inhibitor to the mixture) in the mixture from 0.3 wt% to 50 wt% of corrosion inhibitor to the mixture, such as from 1 wt% to 45 wt%, such as from 2 wt% to 40 wt%, such as from 3 wt% to 35 wt%, such as from 4 wt% to 25 wt%, such as from 8 wt% to 22 wt%, for example 10 wt%, 12 wt%, 15 wt%.

During mixing 202 the corrosion inhibitor can have 90% of the total particles in the mixture (D90) have diameters below a particle diameter of about 2 µm to about 5µm, *e.g.,* about 2 µm, about 3 µm, about 4 µm, or about 5 µm. Alternatively, during mixing 202 the corrosion inhibitor can have 90% of the total particles in the mixture (D90) have diameters below a particle diameter of 2 µm to 5 µm, *e.g.,* 2 µm, 3 µm, 4 µm, or 5 µm. The smaller particle sizes can allow for uniform mixing of the corrosion inhibitor within the mixture. A particle size as referenced herein may refer to average particle size. Average particle size may be determined in a commercially classified product, or by laser light scattering, according to several methods, for example ISO4406.

A sol-gel mixture can be incubated 204 for a period of time, such as from about 1 minute to about 60 minutes, such as from about 5 minutes to about 30 minutes, such as from about 10 minutes to about 20 minutes. Alternatively, a sol-gel mixture can be incubated 204 for a period of time, such as from 1 minute to 60 minutes, such as from 5 minutes to 30 minutes, such as from 10 minutes to 20 minutes. The incubation period allows for polymerization of one or more C-C double bonds to form an alkyl chain, increasing the stability of the sol-gel. Furthermore, pot-life is the period of time from the mixing until the sol-gel is formed (*e.g*., the mixture becomes too viscous to be usable). The pot life can be from about 1 hour to about 24 hours, such as from about 2 hours to about 8 hours, such as about 4 hours. Alternatively, the pot life can be from 1 hour to 24 hours, such as from 2 hours to 8 hours, such as 4 hours. Incubating 204 can be performed under ambient conditions (*e.g*., at room temperature) and/or at elevated temperature. Suitable incubation temperatures include from about 10 °C to about 100 °C, such as from about 20 °C to about 70 °C, such as from about 30 °C to about 50 °C, for example about 40 °C; or, alternatively, from 10 °C to 100 °C, such as from 20 °C to 70 °C, such as from 30 °C to 50 °C, for example 40 °C. Incubating 204 includes, after mixing the mixture comprising sol-gel components, allowing the mixture comprising sol-gel components to stand at room temp for about 30 minutes or more (or 30 minutes or more).

Methods of the present disclosure include curing a mixture comprising sol-gel components. As shown in Figure 2, curing 206 can include drying a mixture comprising sol-gel components disposed on material substrate 104 and can be performed under ambient conditions, at room temperature, and/or at elevated temperature. A curing temperature is from about 10°C to about 150°C, such as from about 30°C to about 100°C, such as from about 50°C to about 90°C, for example about 60°C, about 70°C, or about 80°C. Alternatively, a curing temperature is from 10°C to 150°C, such as from 30°C to 100°C, such as from 50°C to 90°C, for example 60°C, 70°C, or 80°C. Curing 308 can be performed for a period of time, such as from about 1 minute to about 48 hours, such as from about 5 minutes to about 24 hours, such as from about 10 minutes to about 8 hours, such as from about 30 minutes to about 4 hours, for example about 1 hour. Alternatively, curing 308 can be performed for a period of time, such as from 1 minute to 48 hours, such as from 5 minutes to 24 hours, such as from 10 minutes to 8 hours, such as from 30 minutes to 4 hours, for example 1 hour.

Curing 206 can include coating a material substrate 104 with the sol-gel mixture and curing the sol-gel mixture. Coating can include wetting the material substrate 104 with a mixture comprising sol-gel components, for example, by spraying, immersing, brushing, dipping, and/or wiping the mixture comprising sol-gel components onto material substrate 104. For example, suitable forms of spraying include spraying with a spray gun, high-volume, low-pressure spray gun, and/or hand pump sprayer. The mixture comprising sol-gel components is allowed to drain from the wetted material substrate 104 for a few minutes (*e.g*., 1-30 minutes, 1-10 minutes, or 3-10 minutes) and, if necessary, excess, undrained mixture can be blotted off material substrate 104 and/or gently blown off material substrate 104 by compressed air.

Coating includes cleaning and/or pretreating material substrate 104 before wetting the material substrate with the mixture comprising sol-gel components. The metal substrate can be pretreated by immersing the metal substrate into a solution maintained between pH 3.7 - 3.95 using 1N H₂SO₄ or 1N NaOH before applying the sol-gel coating. The solution can include about 3 grams/liter to about 22 grams/liter of water-soluble trivalent chromium salt, about 1.5 grams/liter to about 11.5 grams/liter of an alkali metal hexafluorozirconate, about 0 grams/liter (*e.g*., 0.1 grams/liter) to about 10 grams/liter of a water-soluble thickener, and about 0 grams/liter (*e.g*., 0.1 grams/liter) to about 10 grams/liter of a water-soluble surfactant selected from the group consisting of a non-ionic surfactant, anionic surfactant, cationic surfactant, and combinations thereof, per liter of the solution. Alternatively, the solution can include 3 grams/liter to 22 grams/liter of water-soluble trivalent chromium salt, 1.5 grams/liter to 11.5 grams/liter of an alkali metal hexafluorozirconate, 0 grams/liter (*e.g*., 0.1 grams/liter) to 10 grams/liter of a water-soluble thickener, and 0 grams/liter (*e.g*., 0.1 grams/liter) to 10 grams/liter of a water-soluble surfactant selected from the group consisting of a non-ionic surfactant, anionic surfactant, cationic surfactant, and combinations thereof, per liter of the solution.

Generally, sol-gel 102 adheres and/or bonds better with a clean, bare material substrate, free or substantially free from dirt, nonreactive surface oxides, and/or corrosion products, and preferably populated with a sufficient concentration of reactive hydroxyl groups or other chemically-reactive species. Material substrate surface preparation methods can include degreasing, an alkaline wash, chemical etching, chemically deoxidizing, mechanically deoxidizing (*e.g*., sanding and/or abrading) and/or other suitable approaches towards creating a sol-gel compatible surface. Coating 206 does not typically include coating metal substrate 104 with an undercoating or forming a chemical conversion coating on metal substrate 104, unless the coating is applied to create a hydroxyl-rich substrate or otherwise improved compatibility with the sol-gel. A material substrate surface can become hydroxyl-rich by depositing silica hydroxylates onto the material surface.

After coating and/or curing 206, the sol-gel is suitable for exposure to an external environment and/or for application of a secondary layer 106. A secondary layer 106 of organic material can be deposited before curing 206 is completely finished, for example, depositing a secondary layer 106 is performed at least partially concurrently with curing 206. Depositing can include painting, spraying, immersing, contacting, adhering, and/or bonding sol-gel 102 with the organic material to form secondary layer 106. A secondary layer includes a primer, a paint, a fiber-reinforced plastic, or other suitable organic material.

After coating 210, the sol-gel is suitable for exposure for application of a tertiary layer 112. Depositing can include painting, spraying, immersing, contacting, adhering, and/or bonding secondary layer 106 with the organic material to form tertiary layer 112. A tertiary layer includes a paint, a fiber-reinforced plastic, or other suitable organic material.

### EXAMPLES

Example 1: High temperature resistant (HTR) sol-gel coating formulation with a 1:1 molar ratio of tetraethylorthosilicate (TEOS) and vinyltriethoxysilane (VTS).

An equimolar mixture having 0.05 mol of TEOS and 0.05 mol of VTS was added to a reaction bottle and stirred for 10 minutes using a magnetic stirrer, as shown in Table 1. Ethanol, 0.3 mol, was added as solvent and stirred for another 10 minutes. Distilled water, 0.25 mol, was added and vigorously stirred at room temperature over period of 10 minutes. To ensure complete hydrolysis, 1N hydrochloride acid solution was added to undergo an acid catalyzed reaction. The 1N hydrochloride acid was added until the pH of the solution became 3, *e.g.,* 0.1 mol of hydrochloride acid. The final solution was stirred vigorously for 16 hours at room temperature (RT) to secure hydrolysis and condensation of the silica network.

**Table 1.**

| **Chemicals Name** | **Molecular Weight** | **No. of moles** | **Weight in gm** |
|---|---|---|---|
| Tetraethylorthosilicate (TEOS) | 208.3 | 0.05 | 10.4 |
| Vinyltriethoxysilane (VTS) | 190.3 | 0.05 | 9.5 |
| Ethanol | 46 | 0.3 | 13.8 |
| Water | 18 | 0.25 | 4.5 |
| 1N HCl (Catalyst) | 36.45 | 0.1 | 0.1 |

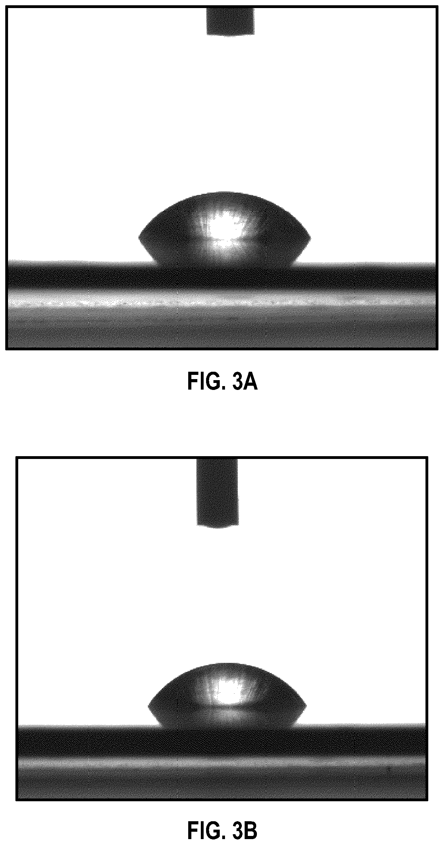

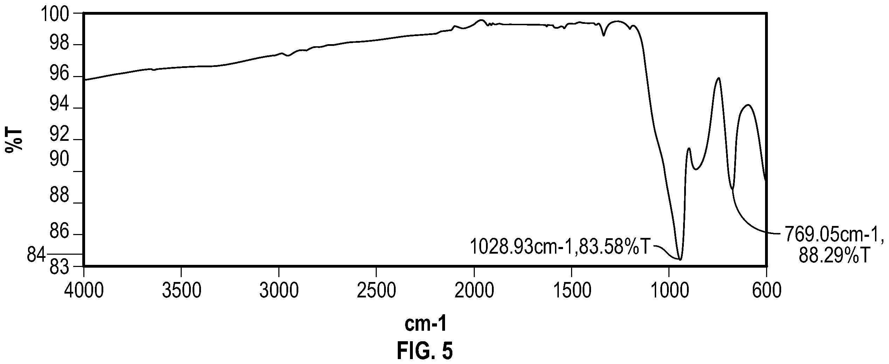

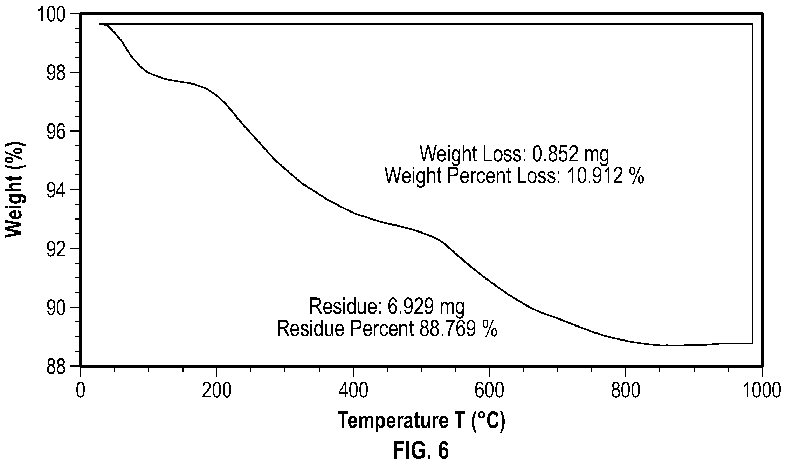

The sol-gel solution was applied on a cleaned Al 2024 substrate by dip application and cured at RT. No discoloration was found after exposure to 250 °C for 100 hours. Based on visual observation, the developed sol-gel coatings were 90 % transparent and no haze or below 5% haze was identified. The water contact angle reduced from 62.1° to 56.6° after exposure to 250 °C for 100 indicating that the coating was not hydrophobic, as shown in FIGS. 3A and 3B. Cracking was found in the sol-gel after exposure to 250 °C for 100 hours using both optical microscopy and scanning electron microscopy (SEM), as shown in FIGS 4A-4D. indicating a reduction in strength and corrosion inhibition. Cured coating was analyzed by Fourier-transform infrared spectroscopy (FTIR) and thermogravimetric analysis (TGA). FTIR data showed 1032 cm^{- 1} and 770 cm⁻¹ peaks, indicating the Si-O-Si linkage and the silica network, respectively, as shown in FIG 5. TGA analysis showed 2.5 wt% weight loss between 30 °C and 200 °C, indicating evaporation of solvents, and 4.5 wt% weight loss at 200 °C - 520 °C, indicating evaporation of organic residues, as shown in FIG. 6..

Example 2: High temperature resistant (HTR) sol-gel coating formulation with a varying molar ratio of TEOS and VTS.

Three mixtures were prepared. The first mixture had molar ratio of TEOS and VTS of 1.5:1. The second mixture had a molar ratio of TEOS and VTS of 2:1. The third mixture had a molar ratio of TEOS and VTS of 2.5:1. Each mixture was independently added to a reaction bottle and stirred for 10 minutes using a magnetic stirrer, as shown in Table 2. Ethanol, 0.3 mol, was added as solvent and stirred for another 10 minutes. Distilled water, 0.25 mol, was added and vigorously stirred at room temperature over period of 10 minutes. To ensure complete hydrolysis, 1N hydrochloride acid solution was added to undergo an acid catalyzed reaction. The 1N hydrochloride acid was added until the pH of the solution became 3, *e.g.,* 0.1 mol of hydrochloride acid. The final solution was stirred vigorously for 16 hours at room temperature (RT) to secure hydrolysis and condensation of the silica network.

**Table 2.**

| **Chemicals Name** | **Mixture 1** | **Mixture 2** | **Mixture 3** |
|---|---|---|---|
| Tetraethylorthosilicate (TEOS) | 0.75 | 0.1 | 0.125 |
| Vinyltriethoxysilane (VTS) | 0.05 | 0.05 | 0.05 |
| Ethanol | 0.3 | 0.3 | 0.3 |
| Water | 0.25 | 0.25 | 0.25 |
| 1N HCl (Catalyst) | 0.1 | 0.1 | 0.1 |

The sol-gel solution was applied on a cleaned Al 2024 substrate by dip application and cured at RT. No discoloration was found after exposure to 250 °C for 100 hours. Based on visual observation, the developed sol-gel coatings were 90 % transparent and no haze or below 5% haze was identified. No cracking was found in any of the mixtures after exposure to 250 °C for 100 hours using SEM, as shown in FIGS 7A-7C.

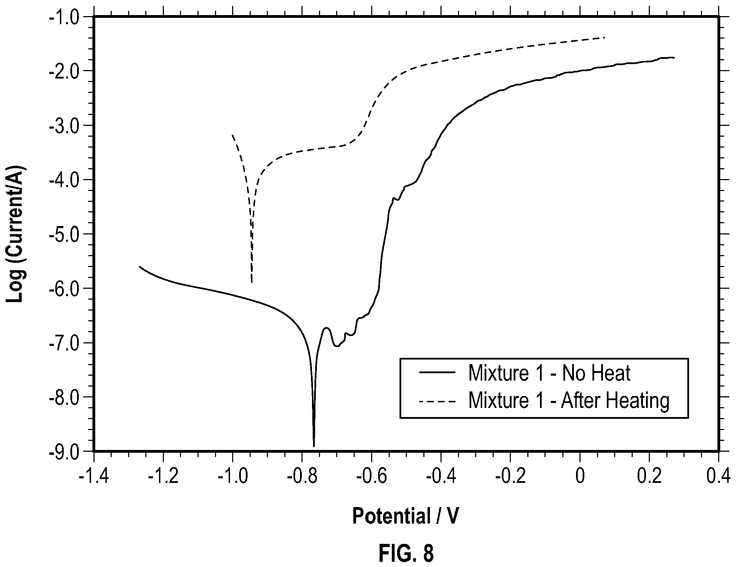

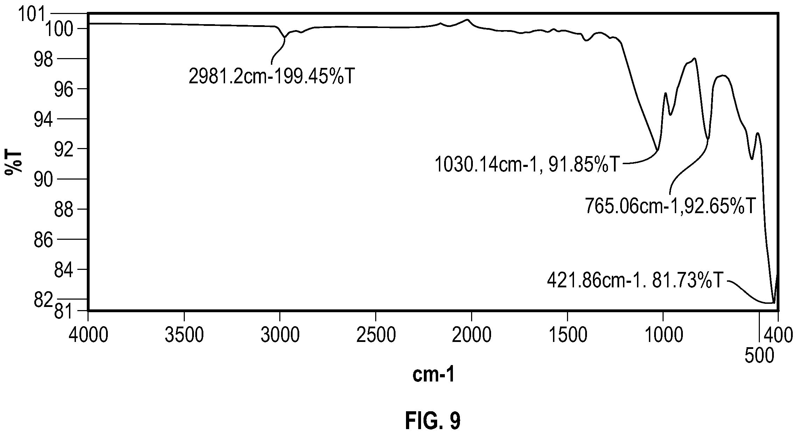

Polarization resistance (Rp) decreased and corrosion current (i_{corr}) increased after heating at 250 °C for 100 Hours for Mixture 2, as shown in Table 3 and FIG. 8. This suggested corrosion resistance reduced after heating due to the hydrophobicity of the sol-gel, even though no cracks were formed to reduce structural integrity. Cured coating was analyzed by Fourier-transform infrared spectroscopy (FTIR), in which the 1030 cm⁻¹ peak corresponded to the Si-O-So linkage and the 765 cm⁻¹ peak corresponded to the silica network, as shown in FIG. 9..

**Table 3.**

| **Specimen** | **Current Density (i_{corr}) A** | **Polarization resistance (Rp) Ω** |
|---|---|---|
| Mixture 2 | 2.214×10⁻⁹ | 1753×10⁴ |
| Mixture 2 after heating | 4.238×10⁻⁸ | 1123×10³ |

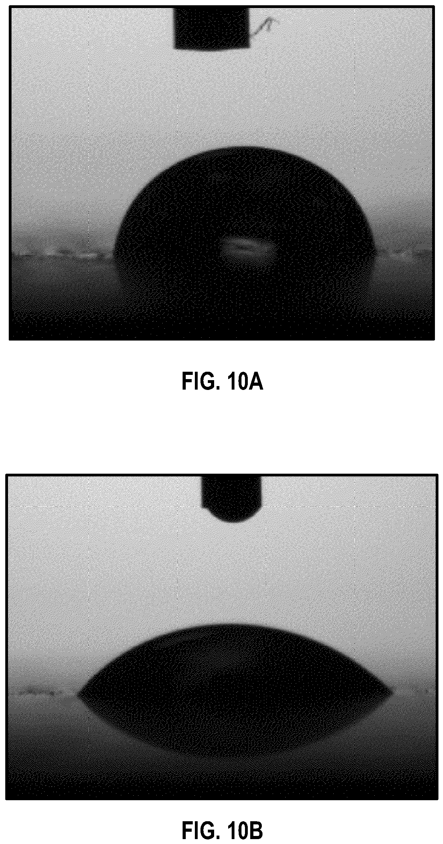

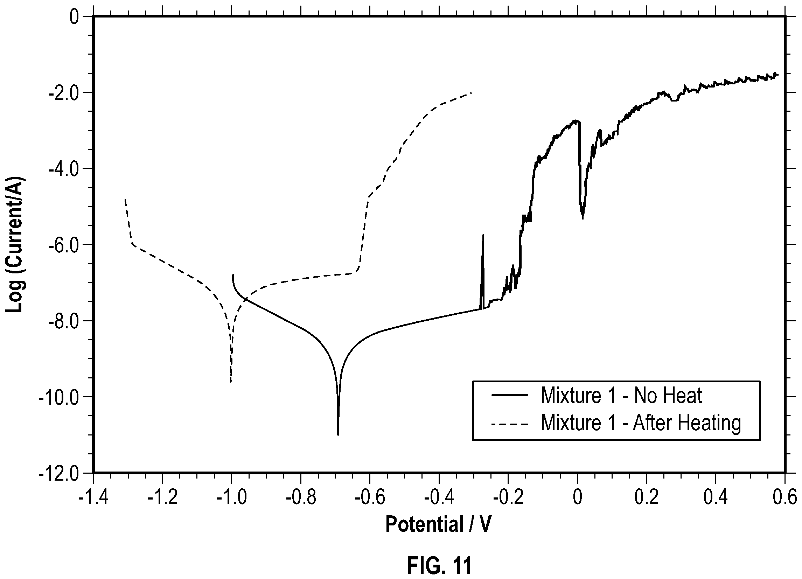

The water contact angle reduced from 78.5° to 44.2° after exposure to 250 °C for 100 for mixture 2 indicating that the coating became hydrophobic after heating, as shown in FIGS. 10A and 10B. Polarization resistance (Rp) decreased and corrosion current (i_{corr}) increased for mixture 1 after heating at 250 °C for 100 Hours, as shown in Table 4 and FIG. 11. This suggested corrosion resistance reduced after heating and hydrophobicity increased, even though no cracks were formed to reduce structural integrity.

**Table 4.**

| **Specimen** | **Current Density (i_{corr}) A** | **Polarization resistance (Rp) Ω** |
|---|---|---|
| Mixture 2 | 2.334×10⁻⁹ | 1779×10⁴ |
| Mixture 2 after heating | 4.478×10⁻⁸ | 1002×10³ |

Example 3: High temperature resistant (HTR) sol-gel coating formulation with a 2:1 molar ratio of TEOS and VTS and a hydrophobic agent.

A mixture of 0.1 mol of TEOS and 0.05 mol of VTS was added to a reaction bottle and stirred for 10 minutes using a magnetic stirrer, as shown in Table 5. Ethanol, 0.3 mol, was added as solvent and stirred for another 10 minutes. Distilled water, 0.25 mol, was added and vigorously stirred at room temperature over period of 10 minutes. To ensure complete hydrolysis, 1N hydrochloride acid solution was added to undergo an acid catalyzed reaction. The 1N hydrochloride acid was added until the pH of the solution became 3, *e.g.,* 0.1 mol of hydrochloride acid. A hydrophobic agent of perfluorooctyltriethoxysilane (PFOTES) was added dropwise to a final concentration of 2 wt% of PFOTES to the total mixture dropwise with stirring. The final solution was stirred vigorously for 16 hours at room temperature (RT) to secure hydrolysis and condensation of the silica network.

**Table 5.**

| **Chemicals Name** | **Molecular Weight g/mol** | **No. of moles** | **Weight in gm** |
|---|---|---|---|
| Tetraethylorthosilicate (TEOS) | 208.3 | 0.1 | 20.8 |
| Vinyltriethoxysilane (VTS) | 190.3 | 0.05 | 9.5 |
| Perfluorooctyltriethoxysilane (PFOTES) | 510.4 | 0.002 | 1 (2 wt%) |
| Ethanol | 46 | 0.3 | 13.8 |
| Water | 18 | 0.25 | 4.5 |
| 1N HCl (Catalyst) | 36.45 | 0.1 | 0.1 |

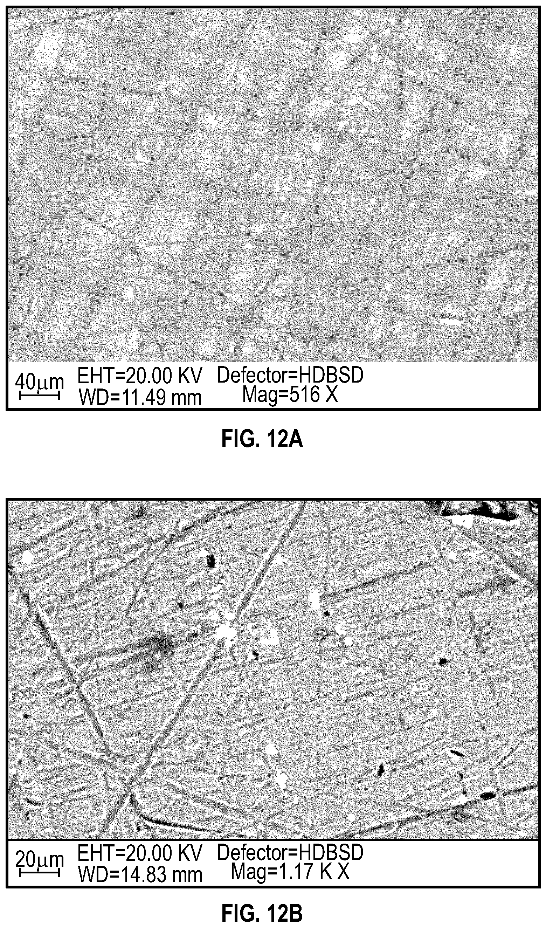

The sol-gel solution was applied on a cleaned Al 2024 substrate by dip application and cured at RT. No discoloration was found after exposure to 250 °C for 100 hours. Based on visual observation, the developed sol-gel coatings were 90 % transparent and no haze or below 5% haze was identified. No cracking was found in any of the mixtures after exposure to 250 °C for 100 hours using SEM, as shown in FIGS 12A and 12B.

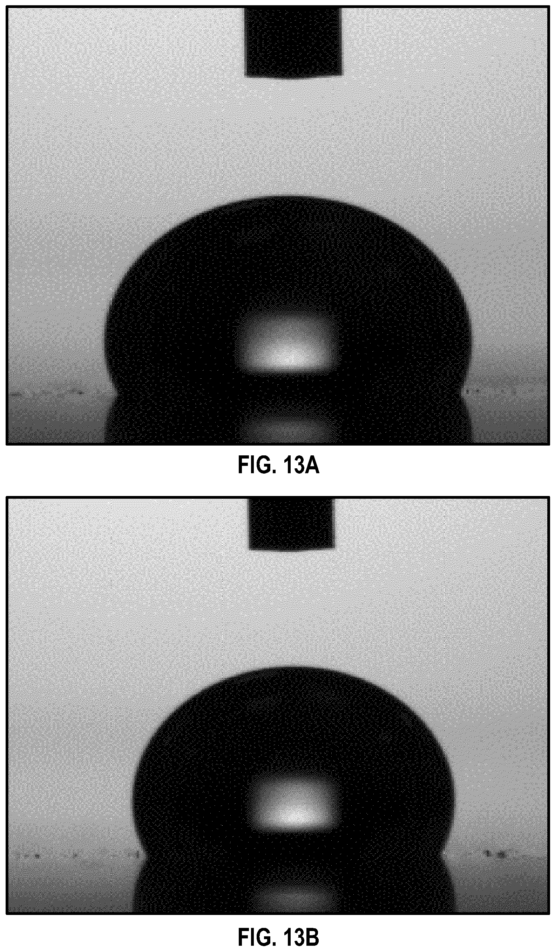

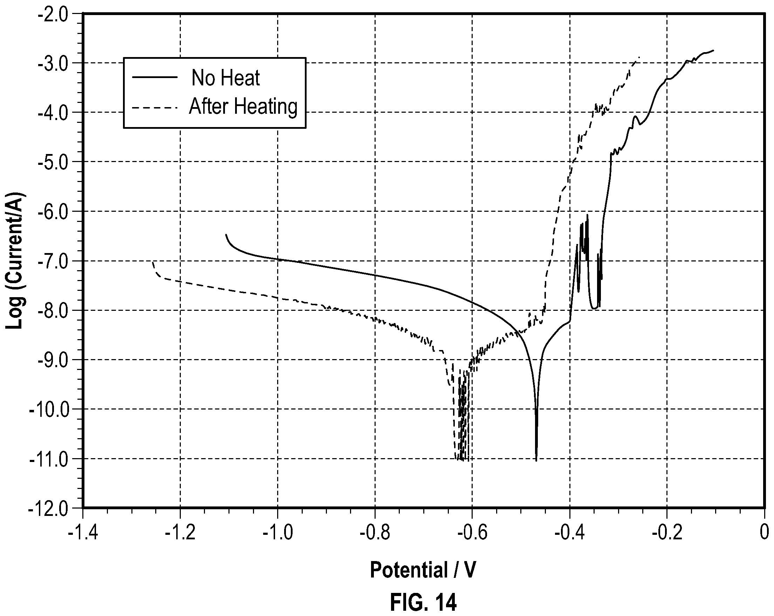

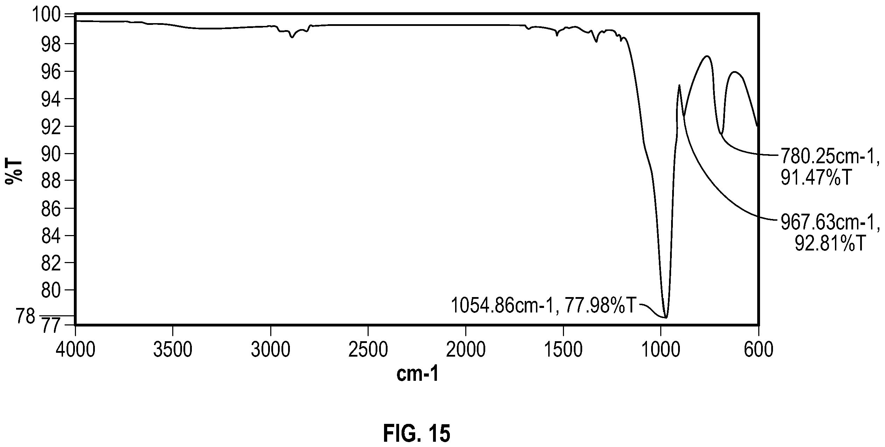

The water contact angle increased from 105.2° to 110.8° after exposure to 250 °C for 100 indicating that the coating became more hydrophobic after heating, as shown in FIGS. 13A and 13B. Polarization resistance (Rp) increased and corrosion current (i_{corr}) decreased after heating at 250 °C for 100 Hours, as shown in Table 6 and FIG. 14. This suggested corrosion resistance after heating, which can be attributed to the hydrophobicity increase and the prevention of cracking in the sol-gel. Cured coating was analyzed by Fourier-transform infrared spectroscopy (FTIR), in which the 1054 cm⁻¹ peak corresponded to the Si-O-Si linkage, the 967 cm⁻¹ peak corresponded to C-O-C linkage, and the 780 cm⁻¹ peak corresponded to the Si-O-C and silica network, as shown in FIG. 15.

**Table 6.**

| **Specimen** | **Current Density (i_{corr}) A** | **Polarization resistance (Rp) Ω** |
|---|---|---|
| Before Heating | 4.275×10⁻⁸ | 4715×10³ |
| After Heating | 9.165×10⁻¹⁰ | 3696×10⁴ |

A pencil hardness test according to ASTM D 3363 showed that the hardness was 4H after 336 hours immersion in water.

Example 4: High temperature resistant (HTR) sol-gel coating formulation with a 2:1 molar ratio of TEOS and VTS and a hydrophobic agent and a crosslinker.

A mixture of 0.1 mol of TEOS, 0.05 mol of VTS, and 0.1 mol of methyltrimethoxysilane (MTMS) was added to a reaction bottle and stirred for 10 minutes using a magnetic stirrer, as shown in Table 7. The MTMS acted to increase the amount of crosslinking, thereby increasing hydrophobicity and/or strength. Ethanol, 0.3 mol, was added as solvent and stirred for another 10 minutes. Distilled water, 0.25 mol, was added and vigorously stirred at room temperature over period of 10 minutes. To ensure complete hydrolysis, 1N hydrochloride acid solution was added to undergo an acid catalyzed reaction. The 1N hydrochloride acid was added until the pH of the solution became 3, *e.g.,* 0.1 mol of hydrochloride acid. A hydrophobic agent of perfluorooctyltriethoxysilane (PFOTES) was added dropwise to a final concentration of 2 wt% of PFOTES to the total mixture dropwise with stirring. The final solution was stirred vigorously for 16 hours at room temperature (RT) to secure hydrolysis and condensation of the silica network.

**Table 7.**

| **Chemicals Name** | **Molecular Weight g/mol** | **No. of moles** | **Weight in gm** |
|---|---|---|---|
| Tetraethylorthosilicate (TEOS) | 208.3 | 0.1 | 20.8 |
| Vinyltriethoxysilane (VTS) | 190.3 | 0.05 | 9.5 |
| Methyltrimethoxysilane (MTMS) | 136.2 | 0.1 | 13.26 |
| Perfluorooctyltriethoxysilane (PFOTES) | 510.4 | 0.002 | 1 (2 wt%) |
| Ethanol | 46 | 0.3 | 13.8 |
| Water | 18 | 0.25 | 4.5 |
| 1N HCl (Catalyst) | 36.45 | 0.1 | 0.1 |

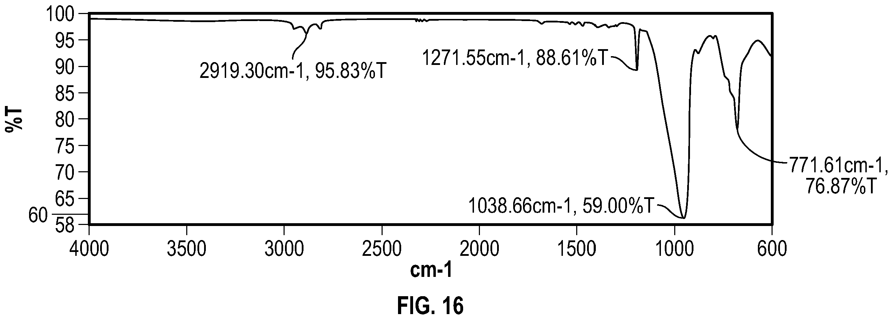

The sol-gel solution was applied on a cleaned Al 2024 substrate by dip application and cured at RT. No discoloration was found after exposure to 250 °C for 100 hours. Based on visual observation, the developed sol-gel coatings were 90 % transparent and no haze or below 5% haze was identified. No cracking was found in any of the mixtures after exposure to 250 °C for 100 hours using SEM. Cured coating was analyzed by Fourier-transform infrared spectroscopy (FTIR), in which the 1038 cm⁻¹ peak corresponded to the Si-O-Si linkage, the 1271 cm⁻¹ peak corresponded to the ether C-O-C linkage, and the 771 cm⁻¹ peak corresponded to the Si-O-C and silica network, as shown in FIG. 16.

ASTM B117 Salt spray test results after 24 hours resulted in no bubbling or adhesion complications. Salt spray test results after 336 hours of exposure to a 5% sodium chloride solution resulted in minimal bubbling and/or pitting.

### ADDITIONAL EXAMPLES

E1. A sol-gel mixture, comprising a first organosilane having a structure represented by formula V: 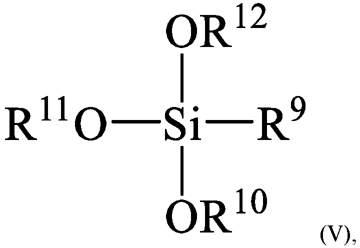 wherein: each of R¹⁰, R¹¹, and R¹² is independently linear or branched C₁₋₂₀ alkyl, and R⁹ is selected from alkyl, cycloalkyl, ether, epoxide, and aryl, a second organosilane represented by formula (V), wherein the second organosilane is different than the first organosilane, and a hydrophobic agent comprising a concentration in the sol-gel mixture of about 1 wt % to about 8 wt% (or of 1 wt % to 8 wt%) of the total sol-gel mixture.

E2. The sol-gel mixture of example E1, wherein the first organosilane and the second organosilane have a mole ratio of about 0.1: 1 to about 10:1 (or 0.1: 1 to 10:1) of first organosilane to second organosilane in the sol-gel mixture.

E3. The sol-gel mixture of example E1 or E2, wherein the first organosilane is present in the sol-gel mixture at about 0.01 mol to about 1.0 mol (or at 0.01 mol to 1.0 mol).

E4. The sol-gel mixture of any one of examples E1-E3, wherein the second organosilane is present in the sol-gel mixture at about 0.01 mol to about 1.0 mol (or at 0.01 mol to 1.0 mol).

E5. The sol-gel mixture of any one of examples E1-E4, wherein the first organosilane is selected from tetraethylorthosilicate, vinyltriethoxysilane, or methyltrimethoxysilane.

E6. The sol-gel mixture of example E5, wherein the second organosilane is selected from tetraethylorthosilicate, vinyltriethoxysilane, or methyltrimethoxysilane, and the second organosilane is different from the first organosilane.

E7. The sol-gel mixture of any one of examples E1-E6, wherein the hydrophobic agent comprises a fluoride group.

E8. The sol-gel mixture of any one of examples E1-E7, wherein the hydrophobic agent comprises perfluorooctyltriethoxysilane.

E9. The sol-gel mixture of any one of examples E1-E8, wherein the hydrophobic agent comprises a concentration of about 2 wt % to about 3 wt% (or 2 wt % to 3 wt%) of the total sol-gel mixture.

E10. The sol-gel mixture of any one of examples E1-E9, wherein the sol-gel further comprises a corrosion inhibitor.

E11. The sol-gel mixture of example E10, wherein the corrosion inhibitor is a mercaptothiadiazole.

E12. The sol-gel mixture of example E11, wherein the dimercaptothiadiazole is 2,5-dimercapto-1,3,4-thiadiazole.

E13. A sol-gel that is a cross-linked siloxane comprising a first siloxane unit represented by formula (I): 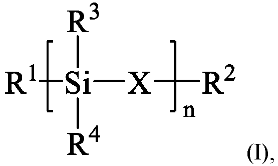 wherein X is an oxygen, R¹ is a hydrogen, oxygen, hydroxyl, or silane group, R² is a hydrogen, hydroxyl, or silane group, each of R³ and R⁴ is independently linear or branched C₁₋₂₀ alkyl, C₁₋₂₀ cycloalkyl, oxysilane, ether, epoxide, aryl alkylfluroide, cycloalkylfluoride, and arylfluoride groups, and n is 1 to 100, a second siloxane unit represented by formula (I), wherein the second siloxane unit is different than the first siloxane unit, and a hydrophobic agent represented by formula (I), wherein the hydrophobic agent comprises at least one alkylflouride group.

E14. The sol-gel of example E13, wherein the first siloxane unit and the second siloxane unit have a mole ratio of about 0.1: 1 to about 10:1 (or of 0.1: 1 to 10:1) of first siloxane unit to second siloxane unit in the sol-gel.

E15. The sol-gel of any one of examples E13 or E14, wherein R¹ is a hydroxyl, R² is not present, R³ is an oxysilane, and R⁴ is an oxysilane for the first siloxane unit.

E16. The sol-gel of any one of examples E13-E15, wherein R¹ is an oxygen, R² is not present, R³ is an oxysilane, and R⁴ is a C₂ alkene for the second siloxane unit.

E17. The sol-gel of any one of examples E13-E16, wherein R¹ is an oxygen, R² is not present, R³ is an oxysilane, and R⁴ is a C₉ alkylfluoride for the hydrophobic agent.

E18. The sol-gel of any one of examples E13-E17, wherein the sol-gel further comprises a corrosion inhibitor.

E19. The sol-gel of any one of examples E13-E18, wherein the sol-gel is represented by formula III: 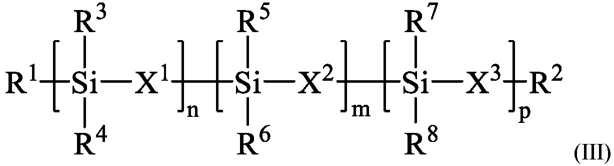 wherein X¹, X², and X³ comprises an oxygen, R¹ is a hydrogen, oxygen, hydroxyl, or silane group, R² is a hydrogen, hydroxyl, or silane group, each of R³, R⁴, R⁵, R⁶, R⁷, and R⁸ is independently linear or branched C₁₋₂₀ alkyl, C₁₋₂₀ cycloalkyl, oxysilane, ether, epoxide, aryl alkylfluroide, cycloalkylfluoride, and arylfluoride groups, n is 1 to 100, m is 1 to 100, and p is 1 to 100,

E20. The sol-gel of example E19, wherein the sol-gel is a polymerized sol-gel having at least one of the R³, R⁴, R⁵, R⁶, R⁷, or R⁸ of a first siloxane unit represented by formula III be cross-linked to a R³, R⁴, R⁵, R⁶, R⁷, or R⁸ of a second siloxane unit represented by formula III.

E21. A method for preparing a sol-gel from a sol-gel mixture, the method comprising producing a sol-gel mixture by mixing a first organosilane with a second organosilane in an organic solvent; adding a hydrophobic agent to the sol-gel mixture; and curing the sol-gel mixture to form a sol-gel.

E22. The method of example E21 wherein the first organosilane and the second organosilane are present in the sol-gel mixture at a mole ratio of about 0.1: 1 to about 10:1 (or of 0.1: 1 to 10:1) of first organosilane to second organosilane in the sol-gel mixture.

E23. The method of example E21 or E22, wherein the first organosilane is present in the sol-gel mixture at about 0.01 mol to about 1.0 mol (or at 0.01 mol to 1.0 mol).

E24. The method of any one of examples E21-E23, wherein the second organosilane is present in the sol-gel mixture at about 0.01 mol to about 1.0 mol (or at 0.01 mol to 1.0 mol).

E25. The method of any one of examples E21-E24, wherein the first organosilane is selected from tetraethylorthosilicate, vinyltriethoxysilane, or methyltrimethoxysilane.

E26. The method of example E25, wherein the second organosilane is selected from tetraethylorthosilicate, vinyltriethoxysilane, or methyltrimethoxysilane, and the second organosilane is different from the first organosilane.

E27. The method of any one of examples E21-E26, wherein the hydrophobic agent comprises a fluoride group.

E28. The method of example E27, wherein the hydrophobic agent comprises perfluorooctyltriethoxysilane.

E29. The method of any one of examples E21-E28, wherein the hydrophobic agent comprises a concentration of about 2 wt % to about 3 wt% (or of 2 wt % to 3 wt%) of the total sol-gel mixture.

E30. The method of any one of examples E21-E29, wherein the sol-gel further comprises a corrosion inhibitor.

E31. The method of example E30, wherein the corrosion inhibitor is a mercaptothiadiazole.

E32. The method of example E31, wherein the dimercaptothiadiazole is 2,5-dimercapto-1,3,4-thiadiazole.

Overall, the sol-gels of the present disclosure offer high temperature resistance sol-gels capable of resisting up to 450 °F (up to 232 °C), while maintaining corrosion resistance and aesthetic appeal. The sol-gel coating remains transparent with minimal to no cracking or discoloration at elevated temperatures. The sol-gel is homogenous or substantially homogenous, having limited and/or no metal oxides, which reduces cracking and discoloration, while maintaining hydrophobicity to enhance longevity of the sol-gel. The sol-gel reduces and/or eliminates the need for chromates as well as reduces production costs, maintenance costs, and repair costs of sol-gel applications. The sol-gel of the present disclosure is free or substantially free of metal oxides, such as metal alkoxides, which reduces the overall amount of cracking and deformation that forms due to heating the sol-gel.

While we have described preferred examples, those skilled in the art will readily recognize alternatives, variations, and modifications which might be made without departing from the inventive concept. The examples illustrate the present disclosure and are not intended to limit it. Accordingly, define the present disclosure with the claims and limit the claims only as necessary in view of the pertinent prior art.

## Claims

1. A sol-gel mixture, comprising:
a first organosilane having a structure represented by formula (V): 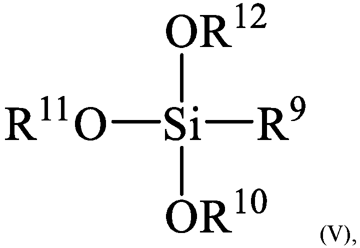
wherein: each of R¹⁰, R¹¹, and R¹² is independently linear or branched C₁₋₂₀ alkyl, and R⁹ is selected from alkyl, cycloalkyl, ether, epoxide, and aryl,
a second organosilane represented by formula (V), wherein the second organosilane is different than the first organosilane, and
a hydrophobic agent comprising a concentration in the sol-gel mixture of about 1 wt % to about 8 wt% of the total sol-gel mixture.

2. The sol-gel mixture of claim 1, wherein the first organosilane and the second organosilane have a mole ratio of about 0.1:1 to about 10:1 of first organosilane to second organosilane in the sol-gel mixture.

3. The sol-gel mixture of claim 1 or 2, wherein:
the first organosilane is selected from tetraethylorthosilicate, vinyltriethoxysilane, or methyltrimethoxysilane; and/or
the second organosilane is selected from tetraethylorthosilicate, vinyltriethoxysilane, or methyltrimethoxysilane, and the second organosilane is different from the first organosilane.

4. The sol-gel mixture of any preceding claim, wherein:
the hydrophobic agent comprises a fluoride group; and/or
the hydrophobic agent comprises a concentration of about 2 wt % to about 3 wt% of the total sol-gel.

5. A sol-gel (102) that is a cross-linked siloxane comprising:
a first siloxane unit represented by formula (I): 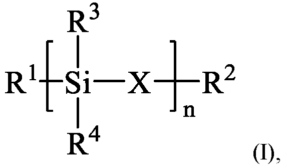
wherein X is an oxygen,
R¹ is a hydrogen, oxygen, hydroxyl, or silane group,
R² is a hydrogen, hydroxyl, or silane group,
each of R³ and R⁴ is independently linear or branched C₁₋₂₀ alkyl, C₁₋₂₀ cycloalkyl, oxysilane, ether, epoxide, aryl alkylfluroide, cycloalkylfluoride, and arylfluoride groups,
and n is 1 to 100;
a second siloxane unit represented by formula (I), wherein the second siloxane unit is different than the first siloxane unit; and
a hydrophobic agent represented by formula (I), wherein the hydrophobic agent comprises at least one alkylflouride group.

6. The sol-gel (102) of claim 7, wherein the first siloxane unit and the second siloxane unit have a mole ratio of about 0.1:1 to about 10:1 of first siloxane unit to second siloxane unit in the sol-gel.

7. The sol-gel (102) of claim 5 or 6, wherein:
R¹ is a hydroxyl, R² is not present, R³ is an oxysilane, and R⁴ is an oxysilane for the first siloxane unit; or
R¹ is an oxygen, R² is not present, R³ is an oxysilane, and R⁴ is a C₂ alkene for the second siloxane unit; or
R¹ is an oxygen, R² is not present, R³ is an oxysilane, and R⁴ is a C₉ alkylfluoride for the hydrophobic agent.

8. The sol-gel (102) of any of claims 5 to 7, wherein the sol-gel (102) further comprises a corrosion inhibitor.

9. The sol-gel (102) of any of claims 5 to 8, wherein the sol-gel (102) is represented by formula III: 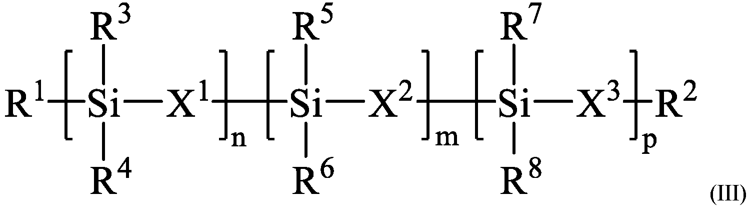
wherein X¹, X², and X³ comprises an oxygen,
R¹ is a hydrogen, oxygen, hydroxyl, or silane group,
R² is a hydrogen, hydroxyl, or silane group,
each of R³, R⁴, R⁵, R⁶, R⁷, and R⁸ is independently linear or branched C₁₋₂₀ alkyl, C₁₋₂₀ cycloalkyl, oxysilane, ether, epoxide, aryl alkylfluroide, cycloalkylfluoride, and arylfluoride groups,
n is 1 to 100,
m is 1 to 100, and
p is 1 to 100.

10. The sol-gel (102) of claim 9, wherein the sol-gel (102) is a polymerized sol-gel having at least one of the R³, R⁴, R⁵, R⁶, R⁷, or R⁸ of the first siloxane unity represented by formula III be cross-linked to a R³, R⁴, R⁵, R⁶, R⁷, or R⁸ of the second siloxane unit represented by formula III.

11. A method for preparing a sol-gel (102) from a sol-gel mixture, the method comprising:
producing a sol-gel mixture by mixing a first organosilane with a second organosilane in an organic solvent;
adding a hydrophobic agent to the sol-gel mixture; and
curing the sol-gel mixture to form a sol-gel.

12. The method of claim 11, wherein the first organosilane and the second organosilane are present in the sol-gel mixture at a mole ratio of about 0.1:1 to about 10:1 of first organosilane to second organosilane.

13. The method of claim 11 or 12, wherein:
the first organosilane is selected from tetraethylorthosilicate, vinyltriethoxysilane, or methyltrimethoxysilane; and/or
the second organosilane is selected from tetraethylorthosilicate, vinyltriethoxysilane, or methyltrimethoxysilane, and the second organosilane is different from the first organosilane.

14. The method of any of claims 11 to 13, wherein the hydrophobic agent comprises a concentration in the sol-gel mixture of about 2 wt % to about 3 wt% of the total sol-gel.

15. The method of any of claims 11 to 14, wherein the sol-gel (102) further comprises a corrosion inhibitor.
